# EUROPEAN PATENT SPECIFICATION

(11) **EP 1 001 154 B1**
(45) Date of publication and mention of the grant of the patent: **20.07.2005**
(21) Application number: 99120408.2
(22) Date of filing: 13.10.1999
(51) Int. Cl.: F02D 43/00, F02D 21/08, F01N 3/08

(54) **Internal combustion engine**
Brennkraftmaschine
Moteur à combustion interne

(30) Priority: 13.11.1998 JP 32389698
(43) Date of publication of application: 17.05.2000
(73) Proprietor: Toyota Jidosha Kabushiki Kaisha, Toyota-shi, Aichi-ken 471-8571 (JP)
(72) Inventor: Yoshizaki, Kouji Toyota Jidosha Kabushiki Kaisha, Toyota-shi, Aichi-ken 471-8571 (JP); Sasaki, Shizuo Toyota Jidosha Kabushiki Kaisha, Toyota-shi, Aichi-ken 471-8571 (JP); Gotoh, Masato Toyota Jidosha Kabushiki Kaisha, Toyota-shi, Aichi-ken 471-8571 (JP); Ito, Takekazu Toyota Jidosha Kabushiki Kaisha, Toyota-shi, Aichi-ken 471-8571 (JP); Murata, Hiroki Toyota Jidosha Kabushiki Kaisha, Toyota-shi, Aichi-ken 471-8571 (JP)
(74) Representative: Pellmann, Hans-Bernd, Dipl.-Ing.

(56) References cited:
- EP-A- 0 732 485
- EP-A- 0 879 946
- EP-A- 0 919 708
- YANAGIHARA H ET AL: "A STUDY OF DI DIESEL COMBUSTION UNDER UNIFORM HIGHER-DISPERSED MIXTURE FORMATION" JSAE REVIEW, SOCIETY OF AUTOMOTIVE ENGINEERS OF JAPAN, TOKYO, JP, vol. 18, no. 3, July 1997 (1997-07), pages 247-254, XP000979665 ISSN: 0389-4304
- PATENT ABSTRACTS OF JAPAN vol. 018, no. 563 (M-1693), 27 October 1994 (1994-10-27) & JP 06 200737 A (TOYOTA MOTOR CORP), 19 July 1994 (1994-07-19)

## Description

### BACKGROUND OF THE INVENTION

### Field of the Invention

The present invention relates to an internal combustion engine according to the preamble of claim 1 equipped with an NOx absorber and a method for prohibiting poisoning of the NOx absorber.

### Description of the Related Art

Conventionally, in an internal combustion engine such as a diesel engine, an engine exhaust passage and an engine intake passage are connected with each other by an exhaust gas recirculation (hereinafter referred to as EGR) passage. Exhaust gas, namely, EGR gas is recirculated into the engine intake passage via the EGR passage. In this case, the EGR gas has a relatively high specific heat and is able to absorb a large amount of heat. Hence, as the amount of EGR gas is increased, that is, as the EGR rate (the amount of EGR gas / the amount of EGR gas + the amount of intake air) is increased, the combustion temperature in a combustion chamber decreases. If the combustion temperature decreases, the generation amount of NOx is reduced. Thus, the larger the EGR rate becomes, the smaller the generation amount of NOx becomes.

As described hitherto, it has been conventionally known that the generation amount of NOx is reduced by increasing the EGR rate. However, in the process of increasing the EGR rate, when the EGR rate exceeds a certain threshold value, the generation amount of soot, namely, smoke starts increasing abruptly. In this respect, it has been conventionally considered that if the EGR rate is increased beyond a certain threshold value, the amount of smoke increases endlessly. In other words, the EGR rate at which the amount of smoke starts increasing abruptly is considered to be a maximum allowable value of the EGR rate.

Accordingly, the EGR rate is set below the maximum allowable value. Although the maximum allowable value of the EGR rate differs greatly depending on a type of the engine or fuel, it is approximately 30 to 50%. Therefore, in the conventional diesel engine, the EGR rate is at most set to 30 to 50%.

As described above, it has been conventionally considered that the EGR rate has a maximum allowable value. Thus, the EGR rate is set so as to reduce a generation amount of NOx to the maximum possible extent, on condition that the EGR rate does not exceed the maximum allowable value. However, even if the EGR rate has been thus determined, the generation amount of NOx cannot be reduced limitlessly. In fact, the generation of a significant amount of NOx is inevitable.

However, the following fact has been discovered in the course of studies on combustion in diesel engines. That is, as described above, if the EGR rate is made larger than the maximum allowable value, the generation amount of smoke increases abruptly. However, the generation amount of smoke has its peak. If the EGR rate is further increased after the generation amount of smoke has reached its peak, the generation amount of smoke then starts decreasing abruptly. If the EGR rate is set to 70% or more during an idling operation, or if the EGR rate is set to about 55% or more in the case where EGR gas is cooled intensively, NOx is hardly generated and the generation amount of smoke becomes almost zero. Namely, soot is hardly generated. Thereafter, based on this discovery, further studies have been conducted on the reason why soot is hardly generated. As a result, a novel unprecedented combustion system capable of reducing soot and NOx simultaneously has been constructed. This novel combustion system will be explained later in detail. In short, this combustion system is based on the idea that the growth of hydrocarbon is stopped before it grows up to become soot.

In other words, it has been revealed by repeated experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of fuel and ambient gas is greatly affected by the endothermic effect of the gas surrounding fuel at the time of fuel combustion. If the endothermic value of the gas surrounding the fuel is adjusted in accordance with an exothermic value during the fuel combustion, the temperature of fuel and ambient gas can be controlled.

Accordingly, if the temperature of fuel and ambient gas in the combustion chamber during combustion is set equal to or lower than a temperature at which the growth of hydrocarbon is stopped halfway, no soot is generated. The temperature of fuel and ambient gas in the combustion chamber during combustion can be set equal to or lower than a temperature at which the growth of hydrocarbon is stopped halfway, by adjusting an endothermic value of the ambient gas. On the other hand, the hydrocarbon that has stopped growing before becoming soot can be cleaned easily by means of a posttreatment that uses an oxidizing catalyst or the like. This is the basic concept of a novel combustion system. The present applicant has already applied for a patent for an internal combustion engine employing the novel combustion system, under the application number of EP-A-879,946.

In the novel combustion system, it is necessary to set the EGR rate equal to or higher than about 55%. However, the EGR rate can be made equal to or higher than about 55% only when the amount of intake air is relatively small, namely, when the engine load is relatively low. If the amount of intake air exceeds a predetermined threshold value, the amount of intake air cannot be increased unless the EGR rate is reduced. Accordingly, if the amount of intake air exceeds the predetermined threshold value, a transition to the conventionally adopted combustion needs to be made.

Furthermore, it is preferable to provide the novel combustion system with a catalyst having a function of oxidation. However, since the conventionally adopted combustion is constantly continued for a while in a conventional combustion area, the catalyst reaches a relatively low temperature. As a result, SOF components contained in combustion gas poison the catalyst and adversely affect its function of oxidation. Then, if a transition from the conventional combustion state to the novel combustion state is made, that is, the novel combustion is started, hydrocarbon components that are generated are not suitably oxidized, since the oxidizing function of the catalyst has deteriorated due to the poisoning by the SOF components.

Therefore, in this case, it is necessary to remove the SOF components by raising a temperature of the catalyst. However, if an electric heater or the like is used to heat the catalyst, the overall costs will increase (e.g. Japanese Patent publication No. HEI 6-200737). Further, even if an attempt is made to increase reactive heat of the catalyst by supplying a great deal of hydrocarbon so as to raise a temperature of the catalyst, there is a possibility that the catalyst does not react and therefore does not rise in temperature. This is because the amount of hydrocarbon supplied is much greater than necessary.

Document EP 0 919 708 A2 describes an exhaust purification device having an oxidation catalyst. To shorten the activation time of the catalyst, it is intended to raise the temperature of the exhaust gas. For this purpose it is switched between two combustion modes. The amount of recirculated exhaust gas is adjusted in accordance with the selected combustion mode.

Document EP 0 732 485 A2 describes an exhaust gas purification device which is equipped with a NOx absorbent for a diesel engine. When NOx should be released from the NOx absorbent, the excess air-fuel ratio of the engine is reduced and it is switched from the normal diesel combustion mode of the diesel engine to a combustion mode in which pre-mixture fuel combustion is dominant. By doing so, even in case of a diesel engine the air-fuel ratio of the exhaust gas can be made lower or equal to the stoichiometric air-fuel ratio.

### SUMMARY OF THE INVENTION

It is an object of the present invention to eliminate poisoning of an NOx absorber and prevent its function of oxidation from deteriorating with a simple structure.

This object is achieved by the features of claims 1 and 10. Further advantageously features are the subject-matters of the dependent claims.

### BRIEF DESCRIPTION OF THE DRAWINGS

The foregoing and further objects, features and advantages of the present invention will become apparent from the following description of preferred embodiments with reference to the accompanying drawings, wherein:
Fig. 1 is a general view of a compression ignition type internal combustion engine;
Fig. 2 shows changes in opening degree of a throttle valve, EGR rate and generation amounts of smoke, HC, CO and NOx in conjunction with changes in air-fuel ratio;
Figs. 3A and 3B show combustion pressures in conjunction with changes in air-fuel ratio;
Fig. 4 shows molecules of fuel;
Fig. 5 shows a relationship between generation amount of smoke and EGR rate;
Fig. 6 shows a relationship between total amount of intake gas and load requirement;
Fig. 7 shows a first operational area I and a second operational area II;
Fig. 8 shows outputs of an air-fuel ratio sensor;
Fig. 9 shows opening degree of the throttle valve, opening degree of the EGR control valve, EGR rate, air-fuel ratio, injection timing and injection amount corresponding to load requirement;
Figs. 10A and 10B show air-fuel ratio in the first operational area I;
Figs. 11A and 11B show maps of target opening degree of the throttle valve and target opening degree of the EGR control valve;
Fig. 12 shows a map of fuel injection amount;
Figs. 13A and 13B show target opening degree in the second operational area II;
Figs. 14A and 14B show maps of target opening degree of the throttle valve and target opening degree of the EGR control valve.
Fig. 15 shows a map of fuel injection amount;
Figs. 16A and 16B illustrate functions of absorbing and discharging NOx;
Figs. 17A and 17B show maps of absorption amount of NOx per unit time;
Fig. 18 illustrates NOx discharge control;
Fig. 19 is a flowchart for processing an NOx discharge flag;
Figs. 20A and 20B are maps of SO_{X} absorption amount per unit time;
Fig. 21 illustrates SO_{X} discharge control;
Fig. 22 is a flowchart for processing an SO_{X} discharge flag;
Fig. 23 is a map of a correction factor relating to temperature of the NOx absorber;
Fig. 24 shows how to process correction of a maximum allowable value;
Fig. 25 illustrates SOF poisoning recovery control;
Fig. 26 is part of a flowchart for controlling operation of the engine;
Fig. 27 is part of a flowchart for controlling operation of the engine;
Fig. 28 is part of a flowchart for controlling operation of the engine;
Fig. 29 is part of a flowchart for controlling operation of the engine;
Fig. 30 is a general view of a compression ignition type internal combustion engine according to a second embodiment of the present invention;
Fig. 31 illustrates NOx discharge control;
Fig. 32 illustrates SOx discharge control;
Fig. 33 illustrates SOF poisoning recovery control;
Fig. 34 is a flowchart for processing a regeneration flag;
Fig. 35 is part of a flowchart for controlling operation of the engine;
Fig. 36 is part of a flowchart for controlling operation of the engine;
Fig. 37 is part of a flowchart for controlling operation of the engine;
Fig. 38 is part of a flowchart for controlling operation of the engine;
Fig. 39 is part of a flowchart for controlling operation of the engine;
Fig. 40 is part of a flowchart for controlling operation of the engine; and
Fig. 41 is a map of optimal air-fuel ratio and optimal rich-state duration time relating to temperature of the NOx absorber.

### DESCRIPTION OF PREFERRED EMBODIMENTS

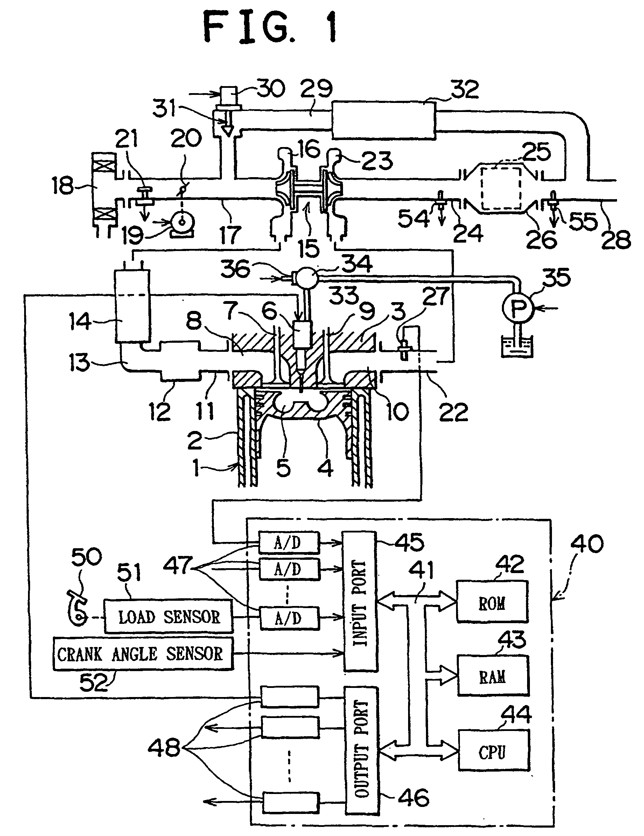

Fig. 1 shows a first embodiment where the present invention is applied to a four-stroke compression ignition type internal combustion engine.

Referring to Fig. 1, reference numerals 1, 2, 3, 4, 5, 6, 7, 8, 9 and 10 denote an engine body, a cylinder block, a cylinder head, a piston, a combustion chamber, an electrically controlled fuel injection valve, an intake valve, an intake port, an exhaust valve and an exhaust port respectively. The intake port 8 is connected to a surge tank 12 via a corresponding intake branch pipe 11. The surge tank 12 is connected to an outlet portion of a compressor 16 of a supercharger such as an exhaust turbocharger 15 via an intake duct 13 and an inter cooler 14. An inlet portion of the compressor 16 is connected to an air cleaner 18 via an air suction pipe 17. Disposed in the air suction pipe 17 is a throttle valve 20, which is driven by a step motor 19. A mass flow rate detector 21 for detecting a mass flow rate of intake air is disposed in the air suction pipe 17 upstream of the throttle valve 20.

On the other hand, the exhaust port 10 is connected to an inlet portion of an exhaust turbine 23 of the exhaust turbocharger 15 via an exhaust manifold 22. An outlet portion of the exhaust turbine 23 is connected to a catalytic converter 26 incorporating a catalyst 25 functioning as an oxidizer. An air-fuel ratio sensor 27 is disposed in the exhaust manifold 22.

An exhaust pipe 28 connected to an outlet portion of the catalytic converter 26 and the air suction pipe 17 downstream of the throttle valve 20 are coupled to each other via an exhaust gas recirculation (hereinafter, referred to as EGR) passage 29. Disposed in the EGR passage 29 is an EGR control valve 31, which is driven by a step motor 30. Furthermore, an inter cooler 32 for cooling EGR gas flowing through the EGR passage 29 is disposed in the EGR passage 29. In the embodiment shown in Fig. 1, engine coolant is introduced into the inter cooler 32 so as to cool EGR gas.

On the other hand, the fuel injection valve 6 is connected to a fuel reservoir, i.e., a so-called common rail 34 via a fuel feed pipe 33. Fuel is supplied to the common rail 34 from an electrically controlled fuel pump 35, whose discharge amount is variable. The fuel supplied to the common rail 34 is supplied to the fuel injection valve 6 via each fuel feed pipe 33. Installed in the common rail 34 is a fuel pressure sensor 36 for detecting a fuel pressure in the common rail 34. Based on an output signal from the fuel pressure sensor 36, the discharge amount of the fuel pump 35 is controlled such that the fuel pressure in the common rail 34 becomes a target fuel pressure.

An electronic control unit 40 is composed of a digital computer and provided with a ROM (read only memory) 42, a RAM (random access memory) 43, a CPU (microprocessor) 44, an input port 45 and an output port 46, which are interconnected with one another by a bi-directional bus 41. An output signal from the mass flow rate detector 21 is inputted to the input port 45 via a corresponding AD converter 47. Output signals from the air-fuel ratio sensor 27 and the fuel pressure sensor 36 are also inputted to the input port 45 via corresponding AD converters 47 respectively. A load sensor 51 is connected to an accelerator pedal 50. The load sensor 51 generates an output voltage proportional to a depression amount L of the accelerator pedal 50. The output voltage of the load sensor 51 is inputted to the input port 45 via a corresponding AD converter 47. Furthermore, a crank angle sensor 52 is connected to the input port 45. The crank angle sensor 52 generates an output pulse every time a crank shaft rotates, for example, by 30°. On the other hand, the output port 46 is connected to the fuel injection valve 6, the step motor 19 for controlling the throttle valve, the step motor 30 for controlling the EGR control valve and the fuel pump 35 via a corresponding driving circuit 48.

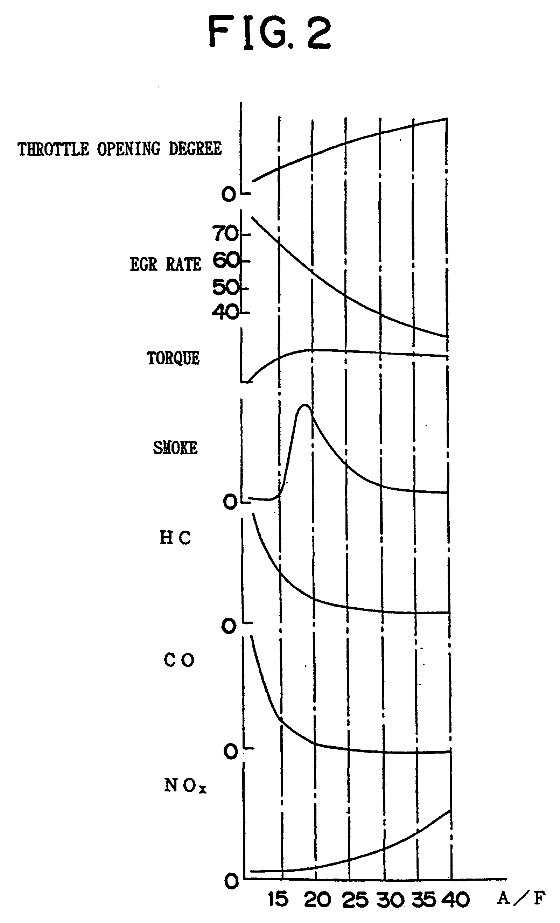

Fig. 2 shows an experimental example indicating changes in output torque and changes in discharge amount of smoke, HC, CO and NOx when the air-fuel ratio A/F (indicated by an axis of abscissa in Fig. 2) is changed by changing an opening degree of the throttle valve 20 and an EGR rate during a low-load operation of the engine. As can be seen from Fig. 2, in this experimental example, the smaller the air-fuel ratio A/F becomes, the larger the EGR rate becomes. When the air-fuel ratio A/F is equal to or smaller than a stoichiometric air-fuel ratio (about 14.6), the EGR rate is equal to or higher than 65%.

As shown in Fig. 2, if the air-fuel ratio A/F is made smaller by increasing the EGR rate, the generation amount of smoke starts increasing when the EGR rate reaches about 40% and the air-fuel ratio A/F reaches about 30. Then, if the air-fuel ratio A/F is made smaller by further increasing the EGR rate, the generation amount of smoke increases abruptly and reaches its peak. Then, if the air-fuel ratio A/F is made smaller by further increasing the EGR rate, the generation amount of smoke drops abruptly. When the EGR rate is equal to or higher than 65% and the air-fuel ratio A/F approaches 15.0, the generation amount of smoke becomes almost zero. That is, soot is hardly generated. At this time, the output torque of the engine drops slightly, and the generation amount of NOx becomes significantly low. On the other hand, the generation amounts of HC and CO start increasing.

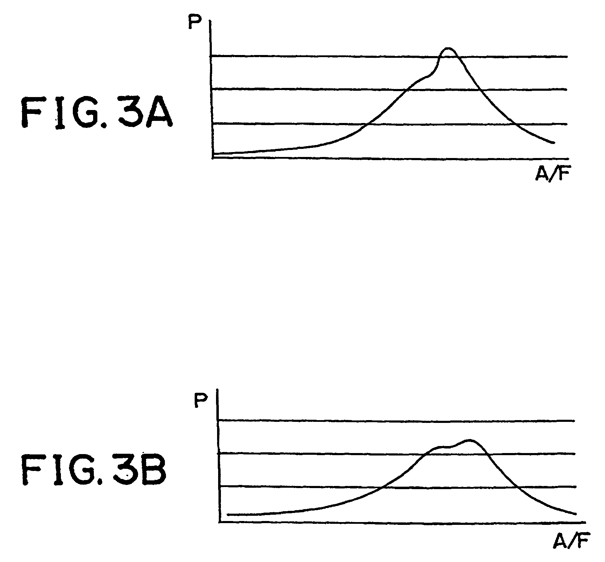

Fig. 3A shows changes in fuel pressure in the combustion chamber 5 when the air-fuel ratio A/F is in the vicinity of 21 and the generation amount of smoke assumes its maximum value. Fig. 3B shows changes in fuel pressure in the combustion chamber 5 when the air-fuel ratio A/F is in the vicinity of 18 and the generation amount of smoke is almost zero. As is apparent from the comparison of Fig. 3A with Fig. 3B, the fuel pressure is lower in the case where the generation amount of smoke is almost zero as shown in Fig. 3B than in the case where the generation amount of smoke is large as shown in Fig. 3A.

The following can be concluded from the experimental results shown in Figs. 2 and 3. That is, first of all, when the air-fuel ratio A/F is equal to or smaller than 15.0 and the generation amount of smoke is almost zero, the generation amount of NOx drops drastically, as can be seen from Fig. 2. The fact that the generation amount of NOx has dropped means that the combustion temperature in the combustion chamber 5 has dropped. Accordingly, when soot is hardly generated, it can be concluded that the combustion temperature in the combustion chamber 5 is low. The same conclusion can also be drawn from Fig. 3. That is, the combustion pressure is low in a state shown in Fig. 3B where soot is hardly generated. Therefore, at this time, it can be concluded that the combustion temperature in the combustion chamber 5 is low.

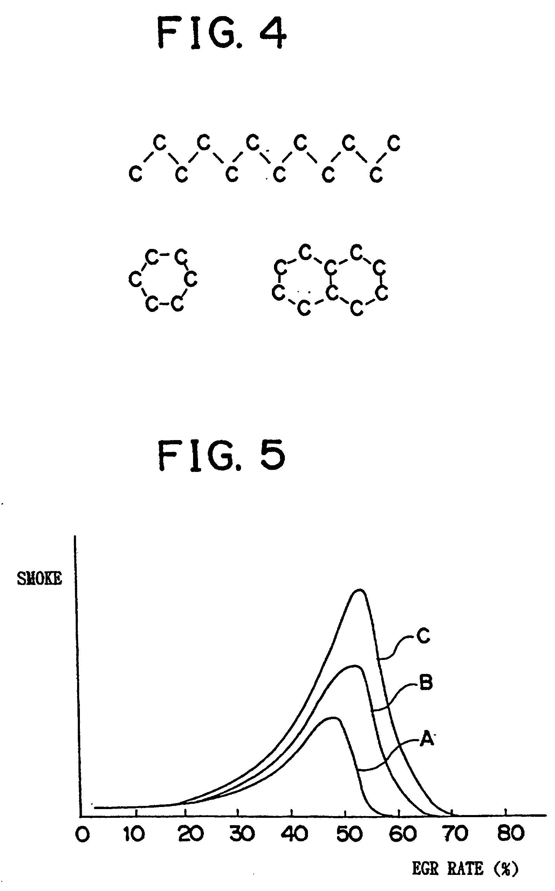

As shown in Fig. 2, when the generation amount of smoke, namely, the generation amount of soot becomes almost zero, the discharge amounts of HC and CO increase. This means that hydrocarbon is discharged before growing up to become soot. In other words, the linear hydrocarbon or aromatic hydrocarbon contained in fuel as shown in Fig. 4 is thermally decomposed when heated in a state of oxygen deficiency, and a precursor of soot is formed. Then, soot that is composed of a solid body of assembled carbon atoms is produced. In this case, the actual process in which soot is produced is complicated, and it is unclear what state the precursor of soot assumes. In any case, the hydrocarbon as shown in Fig. 4 grows up to become soot through the precursor of soot. Accordingly, as described above, when the generation amount of soot becomes almost zero, the discharge amounts of HC and CO increase as shown in Fig. 2. At this time, HC is either the precursor of soot or hydrocarbon in a state prior to the precursor of soot.

The above-described studies based on the experimental results shown in Figs. 2 and 3 are summarized as follows. That is, when the combustion temperature in the combustion chamber 5 is low, the generation amount of soot is almost zero. At this time, the precursor of soot or hydrocarbon in a state prior to the precursor of soot is discharged from the combustion chamber 5. As a result of more elaborate experiments and studies on this subject, it has been revealed that the growing process of soot is stopped halfway, that is, no soot is generated in the case where the temperature of fuel and ambient gas in the combustion chamber 5 is equal to or lower than a certain temperature. When the temperature of fuel and ambient gas in the combustion chamber 5 becomes equal to or lower than the certain temperature, soot is generated.

The temperature of fuel and ambient gas at the time of stoppage of the process of producing hydrocarbon in a state prior to the precursor of soot, that is, the aforementioned certain temperature changes depending on various factors such as the type of fuel, air-fuel ratio, compression ratio and the like. Accordingly, it is impossible to mention a concrete value of the aforementioned certain temperature. However, the aforementioned certain temperature is closely related to the generation amount of NOx and thus can be limited to a certain range judging from the generation amount of NOx. In other words, the larger the EGR rate becomes, the lower the temperature of fuel and ambient gas during combustion becomes. The larger the EGR rate becomes, - the smaller the generation amount of NOx becomes. In this case, when the generation amount of NOx becomes about 10ppm (g/t) or less, soot is hardly generated. Accordingly, the aforementioned certain temperature virtually coincides with a temperature at which the generation amount of NOx becomes about 10ppm (g/t) or less.

Once soot has been produced, the soot cannot be cleaned by means of a posttreatment using a catalyst functioning as an oxidizer. Conversely, the precursor of soot or hydrocarbon in a state prior to the precursor of soot can be cleaned easily by means of a posttreatment using a catalyst functioning as an oxidizer. If such a posttreatment using the catalyst functioning as an oxidizer is taken into account, there is a great difference between the case where hydrocarbon is discharged from the combustion chamber 5 as the precursor of soot or in a state prior to the precursor of soot and the case where hydrocarbon is discharged from the combustion chamber 5 as soot. The important features of the novel combustion system employed in the present invention are that hydrocarbon is discharged from the combustion chamber 5 as the precursor of soot or in a state prior to the precursor of soot without producing soot in the combustion chamber 5 and that the hydrocarbon is oxidized by means of the catalyst functioning as an oxidizer.

In order to stop the growth of hydrocarbon in a state prior to the production of soot, it is necessary to keep fuel and ambient gas in the combustion chamber 5 during combustion lower than a temperature at which soot is produced. In this case, it has been revealed that the endothermic effect of ambient gas at the time of fuel combustion has an enormous effect in limiting the temperature of the fuel and ambient gas.

In other words, if there is only air around fuel, the evaporated fuel immediately reacts with oxygen in the air and burns. In this case, the temperature of the air that is away from the fuel does not rise considerably, and only the air surrounding the fuel locally reaches a very high temperature. Namely, at this time, the air that is away from the fuel is hardly subjected to the endothermic effect of the combustion heat of the fuel. In this case, since the combustion temperature locally becomes very high, the unburnt hydrocarbon that has received the combustion heat produces soot.

On the other hand, if there is fuel in the mixture of a large amount of inactive gas and a small amount of air, things are slightly different. In this case, the evaporated fuel is diffused all around, reacts with the oxygen intermingled in the inactive gas, and burns. In this case, since the inactive gas in the periphery absorbs combustion heat, the combustion temperature does not rise significantly. That is, the combustion temperature can be limited to a low temperature. Namely, the presence of inactive gas plays an important role in limiting the combustion temperature, and the endothermic effect of the inactive gas makes it possible to limit the combustion temperature to a low temperature.

In this case, in order to keep fuel and ambient gas lower than a temperature at which soot is produced, a sufficient amount of inactive gas that can absorb heat of an amount sufficient to achieve such a purpose is required. Therefore, if the amount of fuel increases, the required amount of inactive gas increases correspondingly. In this case, the larger the specific heat of inactive gas becomes, the larger the endothermic effect thereof becomes. Therefore, it is preferable that the specific heat of the inactive gas be large. In this respect, since CO₂ or EGR gas has a relatively large specific heat, it is preferable to use EGR gas as inactive gas.

Fig. 5 shows a relationship between EGR rate and smoke in the case where EGR gas is used as inactive gas and the cooling degree of the EGR gas is changed. That is, referring to Fig. 5, a curve A represents a case where EGR gas is maintained at about 90°C by cooling the EGR gas intensively, a curve B represents a case where EGR gas is cooled by a compact cooling system, and a curve C represents a case where EGR gas is not cooled forcibly.

As indicated by the curve A in Fig. 5, in the case where EGR gas is cooled intensively, the generation amount of soot reaches its peak when the EGR rate is slightly lower than 50%. In this case, if the EGR rate is set to about 55% or more, soot is hardly generated. On the other hand, as indicated by the curve B shown in Fig. 5, in the case where EGR gas is slightly cooled, the generation amount of soot reaches its peak when the EGR rate is slightly higher than 50%. In this case, if the EGR rate is set to about 65% or more, soot is hardly generated.

Furthermore, as indicated by the curve C in Fig. 5, in the case where EGR gas is not cooled forcibly, the generation amount of soot reaches its peak when the EGR rate is in the vicinity of 55%. In this case, if the EGR rate is set to about 70% or more, soot is hardly generated.

Fig. 5 shows a generation amount of smoke when the engine load is relatively high. As the engine load becomes lower, the EGR rate corresponding to a peak generation amount of soot decreases slightly. At this time, the lower limit value of the EGR rate where soot is hardly generated also decreases slightly. Thus, the lower limit value of the EGR rate where soot is hardly generated changes depending on a cooling degree of EGR gas or an engine load.

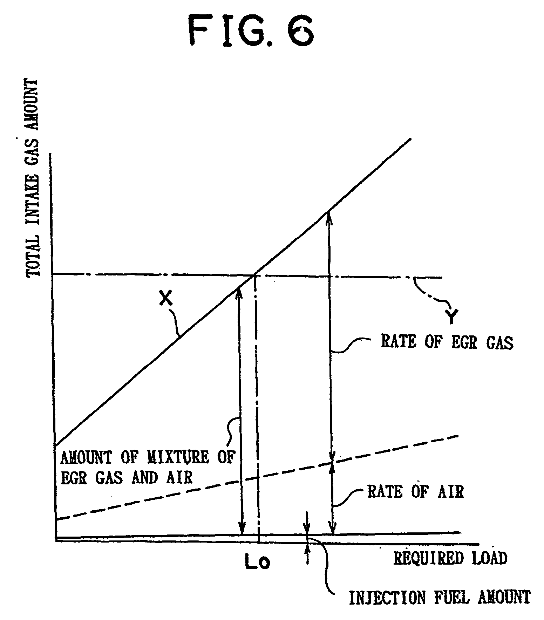

Fig. 6 shows an amount of the mixture of EGR gas and air and a proportion of air to EGR gas in the mixture that are necessary to keep fuel and ambient gas during combustion lower than a temperature at which soot is generated, in the case where EGR gas is used as inactive gas. Referring to Fig. 6, the axis of ordinate represents a total amount of intake gas admitted into the combustion chamber 5, and an alternate long and short dash line Y represents a total amount of intake gas that can be admitted into the combustion chamber 5 when the supercharging operation is not performed. Further, the axis of abscissa represents a load requirement.

Referring to Fig. 6, the proportion of air, namely, the amount of air in the mixture represents an amount of air that is necessary for complete combustion of injected fuel. That is, in the case shown in Fig. 6, the ratio of the amount of air to the amount of injected fuel is equal to the stoichiometric air-fuel ratio. On the other hand, in Fig. 6, the proportion of EGR gas, namely, the amount of EGR gas in the mixture represents a minimum amount of EGR gas that is necessary to keep fuel and ambient gas lower than a temperature at which soot is formed. The aforementioned amount of EGR gas corresponds to an EGR rate of about 55% or more. In the embodiment shown in Fig. 6, the EGR rate is equal to or higher than 70%. Namely, in the case where the total amount of intake gas admitted into the combustion chamber 5 is represented by a solid line X in Fig. 6 and the ratio of the amount of air to the amount of EGR gas is set as shown in Fig. 6, the temperature of fuel and ambient gas becomes lower than a temperature at which soot is produced, and no soot is generated. At this time, the generation amount of NOx is about 10ppm (g/t) or less. Accordingly, the generation amount of NOx is very small.

If the amount of fuel injection increases, the exothermic value at the time of fuel combustion increases. Hence, in order to keep fuel and ambient gas lower than a temperature at which soot is generated, it is necessary to increase an amount of heat to be absorbed by EGR gas. Therefore, as shown in Fig. 6, the amount of EGR gas needs to be increased as the amount of fuel injection increases. In other words, it is necessary to increase an amount of EGR gas as the load requirement becomes higher.

In the case where a supercharging operation is not performed, the total amount X of intake gas admitted into the combustion chamber 5 has an upper limit of Y. Accordingly, in an area in Fig. 6 where the load requirement is larger than L₀, unless the proportion of EGR gas is reduced in accordance with an increase in load requirement, the air-fuel ratio cannot be maintained at the stoichiometric air-fuel ratio. In other words, in the case where the supercharging operation is not performed, if an attempt is made to maintain the air-fuel ratio at the stoichiometric air-fuel ratio in the area where the load requirement is larger than L₀, the EGR rate decreases with increases in load requirement. That is, in the area where the load requirement is larger than L₀, the temperature of fuel and ambient gas cannot be kept lower than a temperature at which soot is generated.

However, as shown in Fig. 1, if EGR gas is recirculated to an inlet side of the supercharger, namely, to the air suction pipe 17 of the exhaust turbocharger 15 via the EGR passage 29, in the area where the load requirement is larger than L₀, the EGR rate can be maintained at 55% or more, for example, at 70%. Thus, the temperature of fuel and ambient gas can be kept lower than a temperature at which soot is generated. That is, if EGR gas is recirculated so as to set the EGR rate in the air suction pipe 17 to, for example, 70%, the EGR rate of the intake gas that has been pressurized by the compressor 16 of the exhaust turbocharger 15 also becomes 70%. Until the pressurization by the compressor 16 reaches its limit, the temperature of fuel and ambient gas can be kept lower than a temperature at which soot is generated. Accordingly, it is possible to enlarge an operational area of the engine where low-temperature combustion can be carried out. If the EGR rate is set to 55% or more in the area where the load requirement is larger than L₀, the EGR control valve 31 is opened completely and the throttle valve 20 is closed slightly.

As described previously, Fig. 6 shows a case where fuel burns under the stoichiometric air-fuel ratio. However, even if the amount of air is made smaller than that shown in Fig. 6, that is, even if the air-fuel ratio is made rich, it is possible to limit the generation amount of NOx to about 10ppm (g/t) or less while preventing generation of soot. Further, even if the amount of air is made larger than that shown in Fig. 6, that is, even if the average of the air-fuel ratio is set to a lean value of 17 to 18, it is possible to limit the generation amount of NOx to about 10ppm (g/t) or less while preventing generation of soot.

In other words, when the air-fuel ratio is made rich, the amount of fuel becomes excessive. However, since the combustion temperature is set low, a surplus of fuel does not grow up to become soot. Thus, no soot is generated. Further, at this time, the generation amount of NOx is very small. On the other hand, even when the average air-fuel ratio is lean or the air-fuel ratio is equal to the stoichiometric air-fuel ratio, if the combustion temperature becomes high, a small amount of soot is produced. However, according to the present invention, since the combustion temperature is set low, no soot is produced. Furthermore, the generation amount of NOx is also very small.

Thus, while the low-temperature combustion is carried out, no soot is generated and the generation amount of NOx is very small regardless of the air-fuel ratio, that is, regardless of whether the air-fuel ratio is rich, equal to the stoichiometric air-fuel ratio, or lean on average. Accordingly, from the standpoint of an enhancement in fuel consumption, it is preferable at this time to set the average air-fuel ratio lean.

Fuel and ambient gas in the combustion chamber during combustion can be kept equal to or lower than a temperature at which the growth of hydrocarbon is stopped halfway, only when the engine load is relatively low, that is, when the exothermic value of combustion is small. Therefore, according to the embodiment of the present invention, when the engine load is low or intermediate, fuel and ambient gas during combustion is kept lower than a temperature at which the growth of hydrocarbon is stopped halfway, and first combustion, namely, low-temperature combustion is carried out. When the engine load is high, second combustion, namely, conventionally adopted combustion is carried out. As is apparent from the foregoing description, when the first combustion, namely, the low-temperature combustion is carried out, the amount of inactive gas in the combustion chamber is larger than the amount of inactive gas corresponding to a peak generation amount of soot, so that soot is hardly generated. When the second combustion, namely, the conventionally adopted combustion is carried out, the amount of inactive gas in the combustion chamber is smaller than the amount of inactive gas corresponding to the peak generation amount of soot.

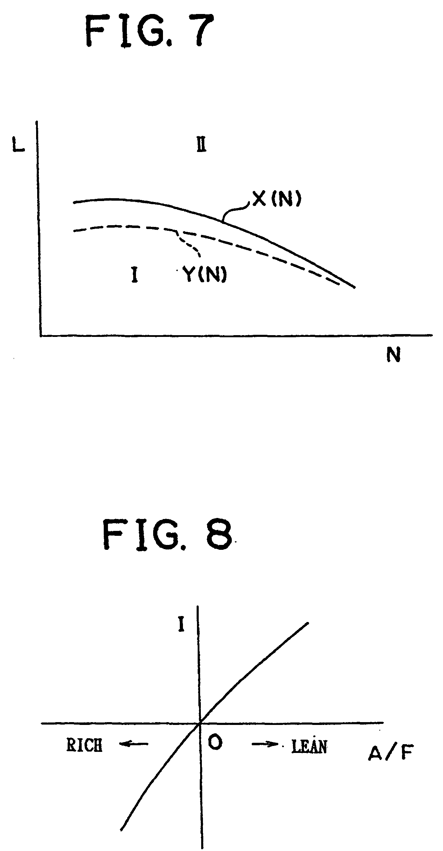

Fig. 7 shows a first operational area I corresponding to a first combustion mode where low-temperature combustion is carried out and a second operational area II corresponding to a second combustion mode where the conventionally adopted combustion is carried out. Referring to Fig. 7, the axis of ordinate L represents depression amount of the accelerator pedal 50, namely, a load requirement, and the axis of abscissa N represents engine speed. Furthermore, X(N) represents a first border between the first operational area I and the second operational area II, and Y(N) represents a second border between the first operational area I and the second operational area II. Based on the first border X(N), it is determined whether or not a transition from the first operational area I to the second operational area II has been made. Based on the second border Y(N), it is determined whether or not a transition from the second operational area II to the first operational area I has been made.

That is, when the engine is in the first operational area I and low-temperature combustion is carried out, if the load requirement L exceeds the first border X(N) which is a function of engine speed N, it is determined that a transition to the second operational area II has been made. Therefore, the conventionally adopted combustion is carried out. Then, if the load requirement L becomes lower than the second border Y(N) which is a function of engine speed N, it is determined that a transition to the first operational area I has been made. Therefore, the low-temperature combustion is carried out again.

The first reason why the first border X(N) and the second border Y(N) have been thus provided is that the combustion temperature is relatively high on the high-load side in the second operational area II and that the low-temperature combustion cannot be carried out immediately even if the load requirement L has become lower than the first border X(N). In other words, unless the load requirement L has become significantly low and dropped below the second border Y(N), the low-temperature combustion cannot be started immediately. The second reason is that a hysteresis is to be set to eliminate fluctuations between the first operational area I and the second operational area II.

When the engine is in the first operational area I and the low-temperature combustion is carried out, soot is hardly generated. Instead, unburnt hydrocarbon is discharged from the combustion chamber 5 in the form of a precursor of soot or in a state prior to the precursor of soot. At this time, the unburnt hydrocarbon that has been discharged from the combustion chamber 5 is purified by a catalyst functioning as an oxidizer, which will be described later. It is to be noted herein that an oxidizing catalyst, a three-way catalyst or an NOx absorber can be employed as the catalyst.

Fig. 8 shows output of the air-fuel ratio sensor 27. As shown in Fig. 8, the output current I of the air-fuel ratio sensor 27 changes in accordance with the air- fuel ratio A/F. Therefore, it is possible to derive an air-fuel ratio from an output current I of the air-fuel ratio sensor 27.

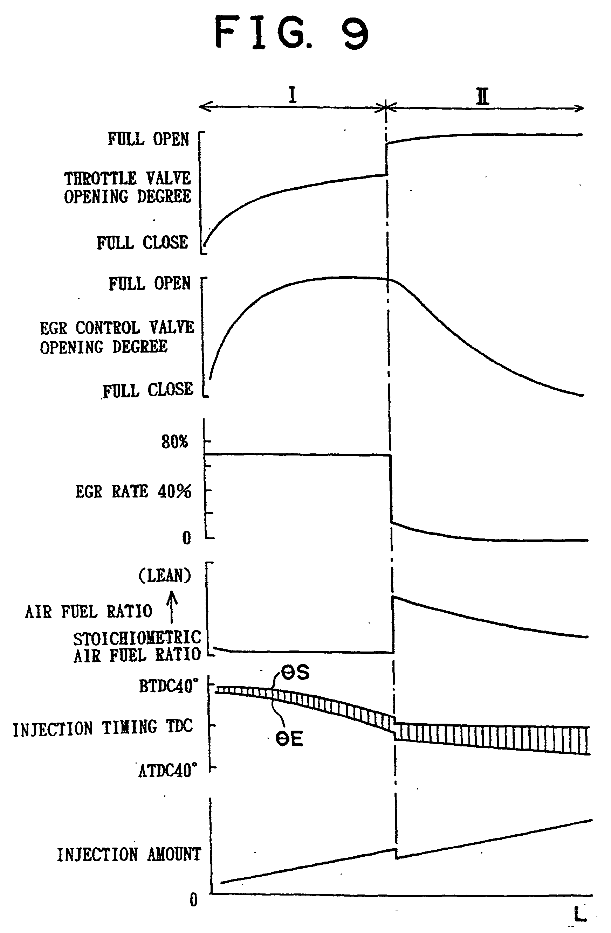

The outline of the operational control performed in the first operational area I and the second operational area II will now be explained with reference to Fig. 9.

Fig. 9 shows changes in opening degree of the throttle valve 20, opening degree of the EGR control valve 31, EGR rate, air-fuel ratio, injection timing and injection amount in accordance with changes in load requirement L. As shown in Fig. 9, in the first operational area I where the load requirement L is low, with increases in load requirement L, the opening degree of the throttle valve 20 gradually increases approximately from a completely closed state to a 2/3-open state. Furthermore, with increases in load requirement L, the opening degree of the EGR control valve 31 gradually increases approximately from a completely closed state to a completely open state. Furthermore, according to an example shown in Fig. 9, the EGR rate is about 70% in the first operational area I, and the air-fuel ratio is slightly lean.

In other words, the opening degrees of the throttle valve 20 and the EGR control valve 31 are controlled such that the EGR rate is about 70% and the air-fuel ratio is slightly lean in the first operational area I. Furthermore, in the first operational area I, fuel injection is carried out before the compression top dead center TDC. In this case, the injection start timing θS is retarded as the load requirement L becomes higher. Besides, the injection end timing θE is also retarded as the injection start timing θS is retarded.

During idling operation, the throttle valve 20 is adjusted to be closed almost completely, and the EGR control valve 31 is also adjusted to be closed almost completely. If the throttle valve 20 is adjusted to be closed almost completely, the pressure in the combustion chamber 5 at the beginning of compression becomes low. Hence, the compressive pressure becomes small. If the compressive pressure becomes small, the compressive work by means of the piston 4 becomes small, so that the vibration of the engine body 1 is reduced. In other words, during idling operation, in order to curb vibration of the engine body 1, the throttle valve 20 is adjusted to be closed almost completely.

On the other hand, if the engine undergoes a transition from the first operational area I to the second operational area II, the opening degree of the throttle valve 20 increases stepwise from a 2/3-open state toward a completely open state. At this time, according to the example shown in Fig. 9, the EGR rate decreases stepwise from about 70% to 40% or less, and the air-fuel ratio increases stepwise. That is, since the EGR rate goes beyond a range (Fig. 5) where a large amount of smoke is generated, there is no possibility of a large amount of smoke being generated when the engine undergoes a transition from the first operational area I to the second operational area II.

In the second operational area II, the conventionally adopted combustion is carried out. In the second operational area II, apart from a few exceptional cases, the throttle valve 20 is held in a completely open state, and the opening degree of the EGR control valve 31 is gradually reduced with increases in load requirement L. In the second operational area II, the EGR rate becomes lower as the load requirement L becomes higher, and the air-fuel ratio becomes smaller as the load requirement L becomes higher. However, the air-fuel ratio remains lean even if the load requirement L has become high. Further, in the second operational area II, the injection start timing θS is in the vicinity of the compressive top dead center TDC.

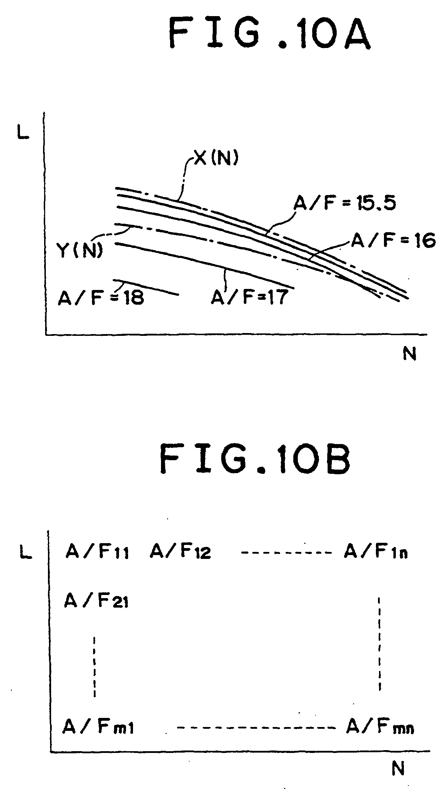

Fig. 10A shows a target air-fuel ratio A/F in the first operational area I. Referring to Fig. 10A, curves indicated by A/F = 15.5, A/F = 16, A/F = 17 and A/F = 18 represent the cases where the air-fuel ratio is 15.5, 16, 17 and 18 respectively. The air-fuel ratios between the respective curves are determined by means of proportional distribution. As can be seen from Fig. 10A, in the first operational area I, the air-fuel ratio is lean. As the load requirement L becomes lower, the air-fuel ratio A/F is shifted toward the lean side.

In other words, as the load requirement L becomes lower, the exothermic value by means of combustion decreases. Therefore, as the load requirement L becomes lower, the low-temperature combustion can be carried out more easily even if the EGR rate has been reduced. If the EGR rate is reduced, the air-fuel ratio becomes larger. Therefore, as shown in Fig. 10, as the load requirement L becomes lower, the air-fuel ratio A/F is made larger. The larger the air-fuel ratio A/F becomes, the more the fuel consumption is improved. Thus, in order to set the air-fuel ratio toward the lean side to the maximum possible extent, according to this embodiment, the air-fuel ratio A/F is made larger as the load requirement L becomes lower.

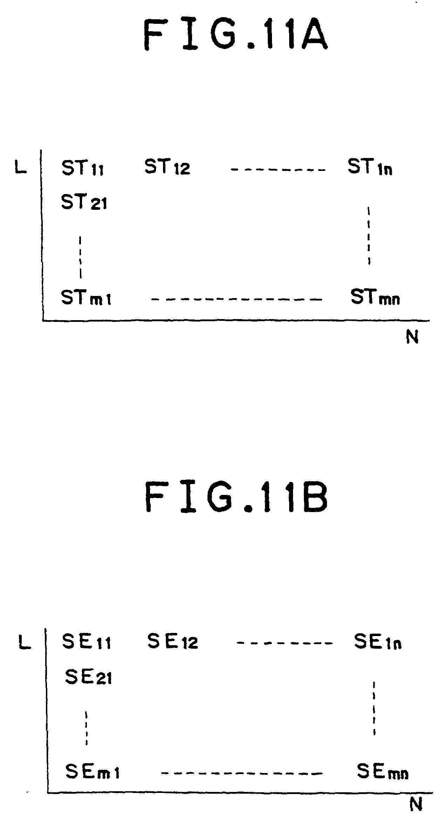

The target air-fuel ratio A/F shown in Fig. 10A is preliminarily stored in the form of a map in the ROM 42 as a function of load requirement L and engine speed N, as can be seen from Fig. 10B. The target opening degree ST of the throttle valve 20, which is necessary for setting the air-fuel ratio to the target air-fuel ratio A/F shown in Fig. 10A, is preliminarily stored in the form of a map in the ROM 42 as a function of load requirement L and engine speed N, as can be seen from Fig. 11A. The target opening degree SE of the EGR control valve 31, which is necessary for setting the air-fuel ratio to the target air-fuel ratio A/F shown in Fig. 10A, is preliminarily stored in the form of a map in the ROM 42 as a function of load requirement L and engine speed N, as can be seen from Fig. 11B.

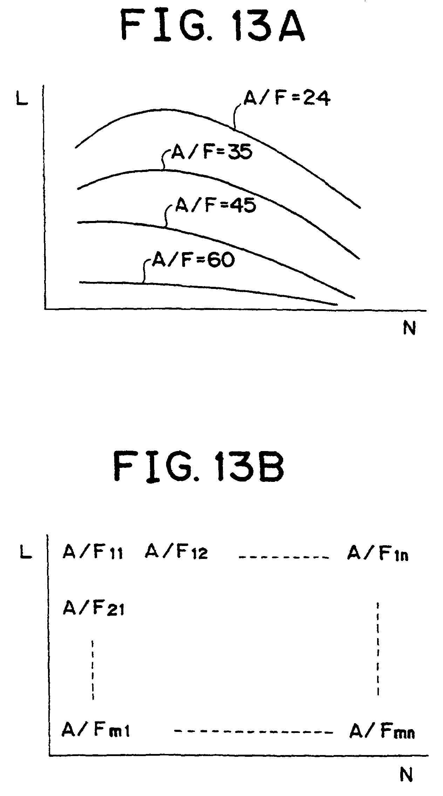

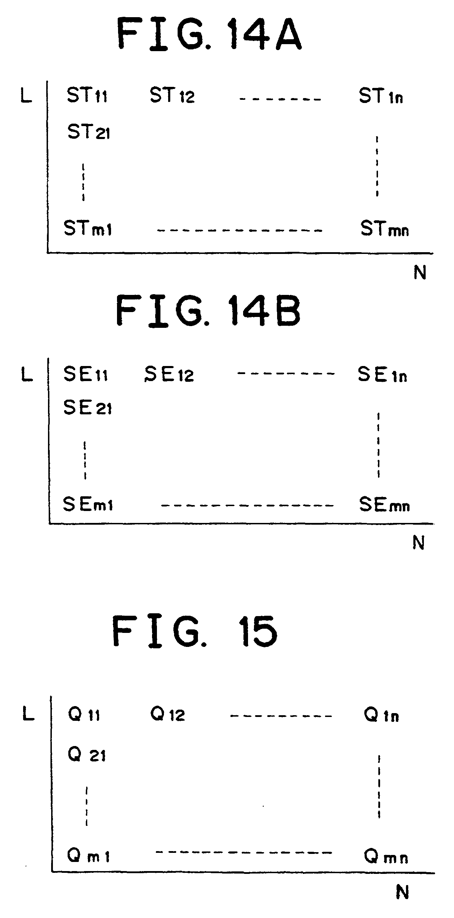

Fig. 13A shows a target air-fuel ratio A/F when the second combustion, namely, the conventionally adopted combustion is carried out. Referring to Fig. 13A, curves indicated by A/F = 24, A/F = 35, A/F = 45 and A/F = 60 represent cases where the air-fuel ratio is 24, 35, 45 and 60 respectively. The target air-fuel ratio A/F shown in Fig. 13A is preliminarily stored in the form of a map in the ROM 42 as a function of load requirement L and engine speed N, as can be seen from Fig. 13B. The target opening degree ST of the throttle valve 20, which is necessary for setting the air-fuel ratio to the target air-fuel ratio A/F shown in Fig. 13A, is preliminarily stored in the form of a map in the ROM 42 as a function of load requirement L and engine speed N, as can be seen from Fig. 14A. The target opening degree SE of the EGR control valve 31, which is necessary for setting the air-fuel ratio to the target air-fuel ratio A/F shown in Fig. 13A, is preliminarily stored in the form of a map in the ROM 42 as a function of load requirement L and engine speed N, as can be seen from Fig. 14B.

Referring to Fig. 1, an NOx absorber 25 is disposed in a casing 26. The NOx absorber 25 has a carrier, for example, of alumina. Carried on this carrier are an alkaline metal such as potassium (K), sodium (Na), lithium (Li) and cesium (Cs), an alkaline earth metal such as barium (Ba) and calcium (Ca), at least one material selected from rare earth metals such as lanthanum (La) and yttrium (Y), and a noble metal such as platinum (Pt). The ratio of the air and the fuel (hydrocarbon) that have been supplied to the intake passage of the engine, the combustion chamber 5 and the exhaust passage upstream of the NOx absorber 25 is referred to as the air-fuel ratio of the exhaust gas that has flown into the NOx absorber 25. When the air-fuel ratio of the inflow exhaust gas is lean, the NOx absorber 25 absorbs NOx. When the air-fuel ratio of the inflow exhaust gas is rich or equal to the stoichiometric air-fuel ratio, the NOx absorber 25 discharges the NOx absorbed therein.

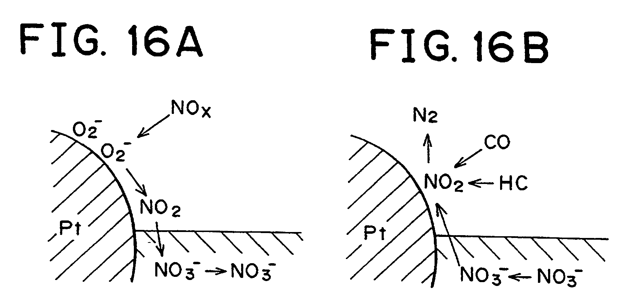

If disposed in the exhaust passage of the engine, the NOx absorber 25 actually performs the functions of absorbing and discharging NOx. However, the detailed mechanism of the functions of absorbing and discharging NOx is not completely clear. However, the functions of absorbing and discharging NOx are considered to be performed under the mechanism as shown in Fig. 16. This mechanism will be explained hereinafter referring to an example where platinum (Pt) and barium (Ba) are carried on the carrier. However, even if another noble metal, an alkaline metal, an alkaline earth metal or a rare earth metal is employed, a similar mechanism works.

In the compression ignition type internal combustion engine shown in Fig. 1, combustion is normally carried out in a state where the air-fuel ratio is lean. In the case where combustion is thus carried out in a state where the air-fuel ratio is lean, the concentration of oxygen in exhaust gas is high. At this time, as shown in Fig. 16A, oxygen O₂ adheres to a surface of Pt in the form of O₂⁻ or O²⁻. On the other hand, the NO contained in the inflow exhaust gas reacts with O₂⁻ or O²⁻ on the surface of Pt and becomes NO₂ (2NO + O₂ → 2NO₂). Then, part of the NO₂ produced is oxidized on Pt, absorbed into the absorber, coupled with barium oxide (BaO), and diffused into the absorber in the form of a nitrate ion NO₃⁻ as shown in Fig. 16A. Thus, NOx is absorbed into the NOx absorber 25. As long as the concentration of oxygen in the inflow exhaust gas is high, NO₂ is produced on the surface of Pt. As long as the ability of the absorber to absorb NOx has not been exhausted, NO₂ is absorbed into the absorber and a nitrite ion NO₃⁻ is produced.

On the other hand, if the air-fuel ratio of inflow exhaust gas is made rich, the concentration of oxygen in the inflow exhaust gas decreases, so that the amount of NO₂ produced on the surface of Pt decreases. If the production amount of NO₂ has dropped, the reaction proceeds in a reverse direction (NO³⁻ → NO₂) and the nitrite ion NO³⁻ in the absorber is discharged therefrom in the form of NO₂. At this time, the NOx that has been discharged from the NOx absorber 25 is reduced by reacting with a large amount of unburnt HC, namely, CO contained in the inflow exhaust gas, as can be seen from Fig. 16B. In this manner, if NO₂ has disappeared from the surface of Pt, NO₂ is discharged from the absorber continuously. Accordingly, if the air-fuel ratio of inflow exhaust gas is made rich, NOx is discharged from the NOx absorber 25 within a short period of time. Because the NOx thus discharged is reduced, there is no possibility of NOx being discharged into the atmosphere.

In this case, even if the air-fuel ratio of inflow exhaust gas is set to the stoichiometric air-fuel ratio, NOx is discharged from the NOx absorber 25. However, in the case where the air-fuel ratio of inflow exhaust gas is set to the stoichiometric air-fuel ratio, NOx is discharged from the NOx absorber 25 gradually. Therefore, it takes a relatively long time to completely discharge the NOx absorbed in the NOx absorber 25.

As described above, the NOx absorber 25 includes a noble metal such as Pt and thus has the function of oxidation. On the other hand, as described previously, when the engine is in the operational area I and the low-temperature combustion is carried out, soot is hardly generated. Instead, unburnt hydrocarbon is discharged from the combustion chamber 5 in the form of a precursor of soot or in a state prior to the precursor of soot. However, as described above, since the NOx absorber 25 has the function of oxidation, the unburnt hydrocarbon that has been discharged from the combustion chamber 5 is suitably oxidized by the NOx absorber 25.

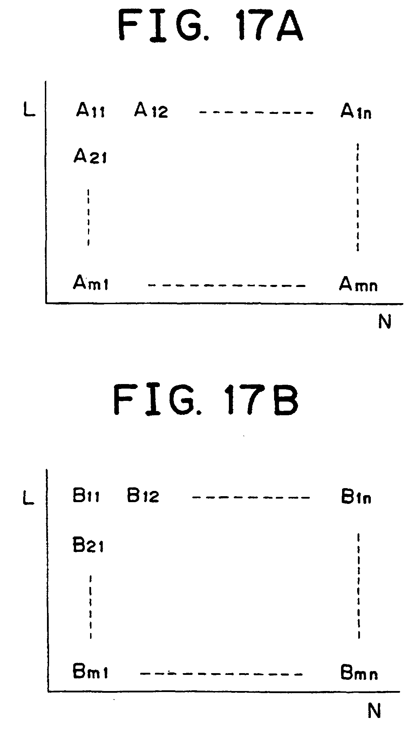

It is to be noted herein that the ability of the NOx absorber 25 to absorb NOx is limited. Hence, it is necessary to discharge NOx from the NOx absorber 25 before the ability to absorb NOx is exhausted. For this purpose, it is necessary to estimate an amount of NOx absorbed in the NOx absorber 25. Thus, according to this embodiment, the absorption amount A of NOx per unit time during the first combustion is preliminarily obtained as a function of load requirement L and engine speed N, in the form of a map as shown in Fig. 17A. The absorption amount B of NOx per unit time during the second combustion is preliminarily obtained as a function of load requirement L and engine speed N, in the form of a map as shown in Fig. 17B. By multiplying these absorption amounts A and B, the amount ΣNO_{X} of NOx absorbed in the NOx absorber 25 is estimated.

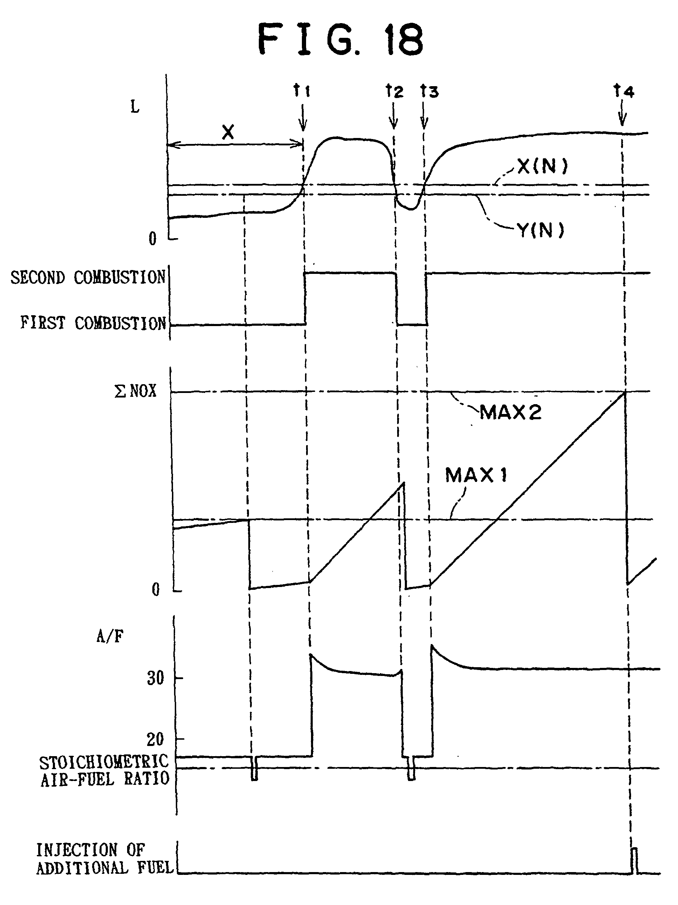

In this embodiment, when the absorption amount ΣNO_{X} of NOx exceeds a predetermined maximum allowable value MAX, NOx is discharged from the NOx absorber 25. This will be explained with reference to Fig. 18.

Referring to Fig. 18, two maximum allowable values, that is, a maximum allowable value MAX1 and a maximum allowable value MAX2 are set in the embodiment of the present invention. The maximum allowable value MAX1 represents about 30% of the maximum amount of NOx that can be absorbed by the NOx absorber 25. The maximum allowable value MAX2 represents about 80% of the maximum amount of NOx that can be absorbed by the NOx absorber 25. If the absorption amount ΣNOx of NOx exceeds the maximum allowable value MAX1 during the first combustion, the air-fuel ratio is made rich so as to discharge NOx from the NOx absorber 25. If the absorption amount ΣNOx of NOx exceeds the maximum allowable value MAX1 during the second combustion, the air-fuel ratio is made rich after being made lean temporarily, so as to discharge NOx from the NOx absorber 25 at the time of a transition from the second combustion to the first combustion. If the absorption amount ΣNOx of NOx exceeds the maximum allowable value MAX2 during the second combustion, additional fuel is injected in the latter half of an expansion stroke or during an exhaust stroke, so as to discharge NOx from the NOx absorber 25.

That is, referring to Fig. 18, the load requirement L is lower than the first border X(N) and the first combustion is carried out during a period X of time. In this case, the air-fuel ratio is slightly lean with respect to the stoichiometric air-fuel ratio. When the first combustion is carried out, the generation amount of NOx is very small. Therefore, at this time, the absorption amount ΣNOx of NOx rises very slowly, as can be seen from Fig. 18. If the absorption amount ΣNOx of NOx exceeds the maximum allowable value MAX1 during the first combustion, the air-fuel ratio A/F is temporarily made rich, whereby NOx is discharged from the NOx absorber 25. At this time, the absorption amount of NOx is set to zero.

As described above, when the first combustion is carried out, no soot is generated regardless of whether the air-fuel ratio is lean, equal to the stoichiometric air-fuel ratio or rich. Accordingly, even if the air-fuel ratio A/F is made rich so as to discharge NOx from the NOx absorber 25 during the first combustion, no soot is generated.

Then, if the load requirement L exceeds the first border X(N) at a time t1, a transition from the first combustion to the second combustion is made. As shown in Fig. 18, when the second combustion is carried out, the air-fuel ratio is comparatively lean. The generation amount of NOx during the second combustion is larger than the generation amount of NOx during the first combustion. Accordingly, when the second combustion is carried out, the absorption amount ΣNOx of NOx rises relatively rapidly.

If the air-fuel ratio A/F is made rich during the second combustion, a large amount of soot is generated. Therefore, the air-fuel ratio A/F cannot be made rich when the second combustion is carried out. Thus, even if the absorption amount ΣNOx of NOx exceeds the maximum allowable value MAX1 during the second combustion as shown in Fig. 18, the air-fuel ratio A/F is not made rich with a view to discharging NOx from the NOx absorber 25. In this case, as shown in Fig. 18, when the load requirement L becomes lower than the second border Y(N) and a transition from the second combustion to the first combustion has been made, the air-fuel ratio A/F is temporarily made rich, after the air-fuel ratio A/F has been made lean so as to discharge NOx from the NOx absorber 25. The air-fuel ratio is thus controlled because of the following reasons. That is, when the second combustion is carried out, the air-fuel ratio in the combustion chamber 5 is comparatively lean. Therefore, the temperature of exhaust gas is relatively low, and the temperature of the NOx absorber 25 is also relatively low. Thus, if the air-fuel ratio in the combustion chamber 5 is made rich immediately after a transition from the second combustion to the first combustion, the unburnt hydrocarbon flowing into the NOx absorber 25 may adhere to the surface of the NOx absorber 25 without reacting with NOx. That is, in order to suitably absorb NOx into the NOx absorber 25 or suitably discharge NOx from the NOx absorber 25, the temperature of the NOx absorber 25 needs to be raised to a certain temperature. On the other hand, even if the air-fuel ratio in the combustion chamber 5 is lean during the first combustion, a relatively large amount of unburnt hydrocarbon is discharged from the combustion chamber 5. That is, if the first combustion, during which the air-fuel ratio in the combustion chamber 5 is lean, is continued at the time of a transition from the second combustion to the first combustion, the temperature of the NOx absorber 25 can be raised sufficiently. Unburnt hydrocarbon is supplied to the NOx absorber 25 in such an amount that the unburnt hydrocarbon will not adhere to the NOx absorber 25. Thereafter, if the air-fuel ratio in the combustion chamber 5 is made rich, NOx is suitably discharged and reduced in the NOx absorber 25. This is why the air-fuel ratio in the combustion chamber 5 is controlled as described above.

Then, a transition from the first combustion to the second combustion is made at a time t3 in Fig. 18, and the second combustion is continued for a while. At this time, if the absorption amount ΣNOx of NOx exceeds the maximum allowable value MAX1 and then exceeds the maximum allowable value MAX2 at a time t4, additional fuel is injected in the latter half of an expansion stroke or during an exhaust stroke so as to discharge NOx from the NOx absorber 25. Thus, the air-fuel ratio of exhaust gas flowing into the NOx absorber 25 is made rich.

The additional fuel injected in the latter half of an expansion stroke or during an exhaust stroke does not contribute to generation of engine outputs. Therefore, it is preferable that additional fuel be injected as infrequently as possible. Thus, if the absorption amount ΣNOx of NOx exceeds the maximum allowable value MAX1 during the second combustion, the air-fuel ratio A/F is temporarily made rich at the time of a transition from the second combustion to the first combustion. Only in a special case where the absorption amount ΣNOx of NOx exceeds the maximum allowable value MAX2, additional fuel is injected.

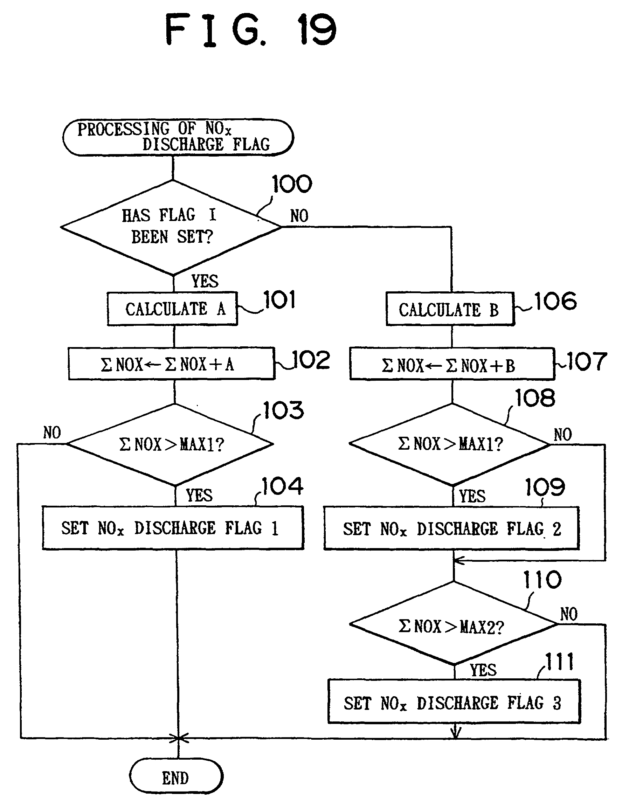

Fig. 19 shows a routine of processing an NOx discharge flag that is set when NOx needs to be discharged from the NOx absorber 25. This routine is carried out as interruption handling at constant time intervals.

Referring to Fig. 19, first of all, it is determined in step 100 whether or not a flag I indicating that the engine is in the operational area I has been set. If the flag I has been set, that is, if the engine is in the operational area I, the process proceeds to step 101 where the absorption amount A of NOx per unit time is calculated from the map shown in Fig. 17A. Then in step 102, A is added to the absorption amount ΣNOx of NOx. Then in step 103, it is determined whether or not the absorption amount ΣNOx of NOx has exceeded the maximum allowable value MAX1. If ΣNOx > MAX1, the process proceeds to step 104 where a processing of setting an NOx discharge flag 1 is performed.

On the other hand, if it is determined in step 100 that the flag I has been reset, that is, if the engine is in the operational area II, the process proceeds to step 106 where the absorption amount B of NOx per unit time is calculated from the map shown in Fig. 17B. Then in step 107, B is added to the absorption amount ΣNOx of NOx. Then in step 108, it is determined whether or not the absorption amount ΣNOx of NOx has exceeded the maximum allowable value MAX1. If ΣNOx > MAX1, the process proceeds to step 109 where a processing of setting an NOx discharge flag 2 is performed. Then, it is determined in step 110 whether or not the absorption amount ΣNOx of NOx has exceeded the maximum allowable value MAX2. If ΣNOx > MAX2, the process proceeds to step 111 where a processing of setting the NOx discharge flag is performed.

The NOx absorber 25 absorbs not only NOx but also SO_{X} contained in exhaust gas. SO_{X} is also discharged from the NOx absorber 25 and reduced if the air-fuel ratio of exhaust gas flowing into the NOx absorber 25 is made equal to the stoichiometric air-fuel ratio or rich. However, the bonding force of SO_{X} to the NOx absorber 25 is greater than that of NOx to the NOx absorber 25. Hence, even if the air-fuel ratio is controlled so as to discharge NOx from the NOx absorber 25, SO_{X} is unlikely to be discharged from the NOx absorber 25. This is because the temperature at which the NOx absorber 25 starts discharging SO_{X} is higher than the temperature at which the NOx absorber 25 starts discharging NOx. However, if no measure is taken to prevent an increase in absorption amount of SO_{X} in the NOx absorber 25, the amount of NOx that can be absorbed into the NOx absorber 25 decreases. That is, the capability of the NOx absorber 25 to absorb NOx is soon exhausted, and the air-fuel ratio is frequently made rich so as to discharge and reduce NOx, so that the fuel consumption deteriorates. Accordingly, before the capability of the NOx absorber 25 to absorb NOx deteriorates extremely, SO_{X} needs to be discharged from the NOx absorber 25. For this purpose, first of all, it is necessary to estimate an amount of SO_{X} absorbed into the NOx absorber 25 and to raise a temperature of the NOx absorber 25 until the NOx absorber 25 starts discharging SO_{X}.

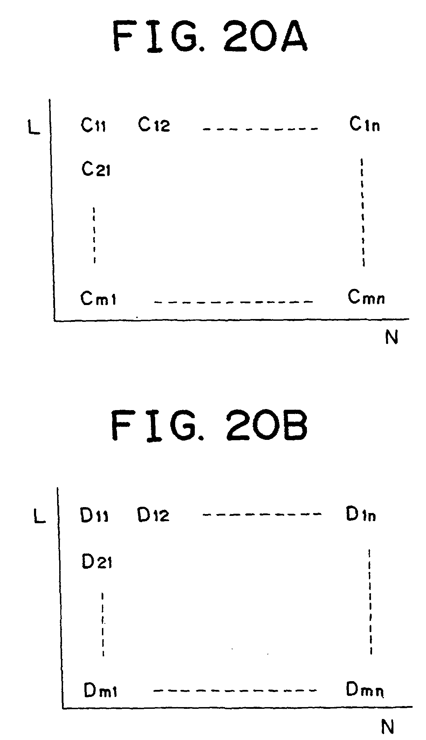

In the embodiment of the present invention, an absorption amount C of SO_{X} per unit time during the first combustion is preliminarily obtained as a function of load requirement L and rotational speed N of the engine, in the form of a map shown in Fig. 20A. An absorption amount D of SO_{X} per unit time during the second combustion is obtained as a function of load requirement L and rotational speed N of the engine, in the form of a map shown in Fig. 20B. By multiplying the absorption amount C of SO_{X} per unit time by the absorption amount D of SO_{X} per unit time, an amount ΣSO_{X} of SO_{X} absorbed into the NOx absorber 25 is estimated.

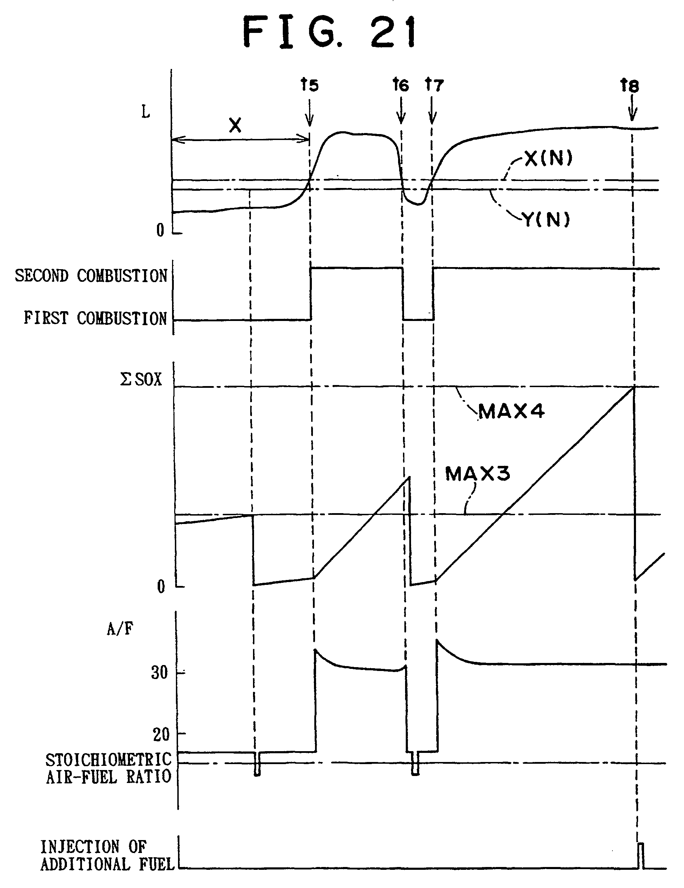

In the embodiment of the present invention, when the absorption amount ΣSO_{X} of SO_{X} exceeds a predetermined maximum allowable value, SO_{X} is discharged from the NOx absorber 25. This will be explained with reference to Fig. 21.

Referring to Fig. 21, two maximum allowable values, that is, a maximum allowable value MAX3 and a maximum allowable value MAX4 are set in the embodiment of the present invention. The maximum allowable value MAX3 represents about 30% of the maximum amount of NOx that can be absorbed by the NOx absorber 25. The maximum allowable value MAX4 represents about 80% of the maximum amount of NOx that can be absorbed by the NOx absorber 25. If the absorption amount ΣSOx of SOx exceeds the maximum allowable value MAX3 during the first combustion, the air-fuel ratio is made rich so as to discharge SOx from the NOx absorber 25. If the absorption amount ΣSOx of SOx exceeds the maximum allowable value MAX3 during the second combustion, the air-fuel ratio is made rich after being made lean temporarily, so as to discharge SOx from the NOx absorber 25 at the time of a transition from the second combustion to the first combustion. If the absorption amount ΣSOx of SOx exceeds the maximum allowable value MAX4 during the second combustion, additional fuel is injected in the latter half of an expansion stroke or during an exhaust stroke, so as to discharge NOx from the NOx absorber 25.

That is, referring to Fig. 21, the load requirement L is lower than the first border X(N) and the first combustion is carried out during a period X of time. In this case, the air-fuel ratio is slightly lean with respect to the stoichiometric air-fuel ratio. When the first combustion is carried out, the generation amount of SOx is very small. Therefore, at this time, the absorption amount ΣSOx of SOx rises very slowly, as can be seen from Fig. 21. If the absorption amount ΣSOx of SOx exceeds the maximum allowable value MAX3 during the first combustion, the air-fuel ratio A/F is temporarily made rich, whereby NOx is discharged from the NOx absorber 25. At this time, the absorption amount of NOx is set to zero. In this case, in comparison with the case of discharging NOx, the degree of richness is increased. This is because, in order to discharge SO_{X}, whose bonding force to the NOx absorber 25 is greater than that of NOx, from the NOx absorber 25, the temperature of the NOx absorber 25 needs to be higher than a temperature at which the NOx absorber 25 starts discharging SO_{X}. If the degree of richness of the air-fuel ratio is increased, the temperature of exhaust rises, whereby the temperature of the NOx absorber 25 rises.

Then, if the load requirement L exceeds the first border X(N) at a time t5, a transition from the first combustion to the second combustion is made. As shown in Fig. 21, when the second combustion is carried out, the air-fuel ratio is significantly lean. The generation amount of SOx during the second combustion is larger than the generation amount of SOx during the first combustion. Accordingly, when the second combustion is carried out, the absorption amount ΣSOx of SOx rises relatively rapidly.

If the air-fuel ratio A/F is made rich during the second combustion, a large amount of soot is generated. Therefore, the air-fuel ratio A/F cannot be made rich when the second combustion is carried out. Thus, even if the absorption amount ΣSOx of SOx exceeds the maximum allowable value MAX3 during the second combustion as shown in Fig. 21, the air-fuel ratio A/F is not made rich with a view to discharging SOx from the NOx absorber 25. In this case, as shown in Fig. 21, when the load requirement L becomes lower than the second border Y(N) and a transition from the second combustion to the first combustion has been made, the air-fuel ratio A/F is temporarily made rich, after the air-fuel ratio A/F has been made lean so as to discharge SOx from the NOx absorber 25. The air-fuel ratio is thus controlled because of the same reason as in the aforementioned case where NOx is discharged from the NOx absorber 25 at the time of a transition from the second combustion to the first combustion. That is, control is performed such that when SO_{X} needs to be discharged, the temperature of the NOx absorber 25 is raised, so as to prevent unburnt hydrocarbon from adhering to the NOx absorber 25.

Then, it is assumed that a transition from the first combustion to the second combustion is made at a time t7 and that the second combustion has been continued for a while. In this case, if the absorption amount ΣSO_{X} of SO_{X} exceeds the maximum allowable value MAX3 and then exceeds the maximum allowable value MAX4 at a time t8, additional fuel is injected in the latter half of an expansion stroke or during an exhaust stroke, so that the air-fuel ratio of exhaust gas flowing into the NOx absorber 25 is made rich.

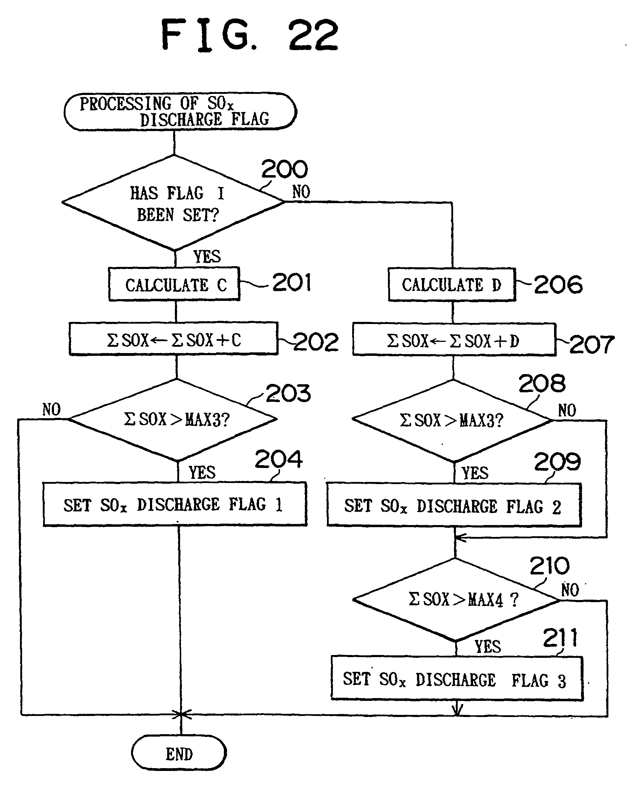

Fig. 22 shows a routine of processing an SOx discharge flag that is set when SOx needs to be discharged from the NOx absorber 25. This routine is carried out as interruption handling at constant time intervals.

Referring to Fig. 22, first of all, it is determined in step 200 whether or not a flag I indicating that the engine is in the operational area I has been set. If the flag I has been set, that is, if the engine is in the operational area I, the process proceeds to step 201 where the absorption amount C of SOx per unit time is calculated from the map shown in Fig. 20A. Then in step 202, C is added to the absorption amount ΣSOx of SOx. Then in step 203, it is determined whether or not the absorption amount ΣSOx of SOx has exceeded the maximum allowable value MAX3. If ΣSOx > MAX3, the process proceeds to step 204 where a processing of setting an SOx discharge flag 1 is performed.

On the other hand, if it is determined in step 200 that the flag I has been reset, that is, if the engine is in the operational area II, the process proceeds to step 206 where the absorption amount D of SOx per unit time is calculated from the map shown in Fig. 20B. Then in step 207, D is added to the absorption amount ΣSOx of SOx. Then in step 208, it is determined whether or not the absorption amount ΣSOx of SOx has exceeded the maximum allowable value MAX3. If ΣSOx > MAX3, the process proceeds to step 209 where a processing of setting an SOx discharge flag 2 is performed. Then, it is determined in step 210 whether or not the absorption amount ΣSOx of SOx has exceeded the maximum allowable value MAX4. If ΣSOx > MAX4, the process proceeds to step 211 where a processing of setting the NOx discharge flag 3 is performed.

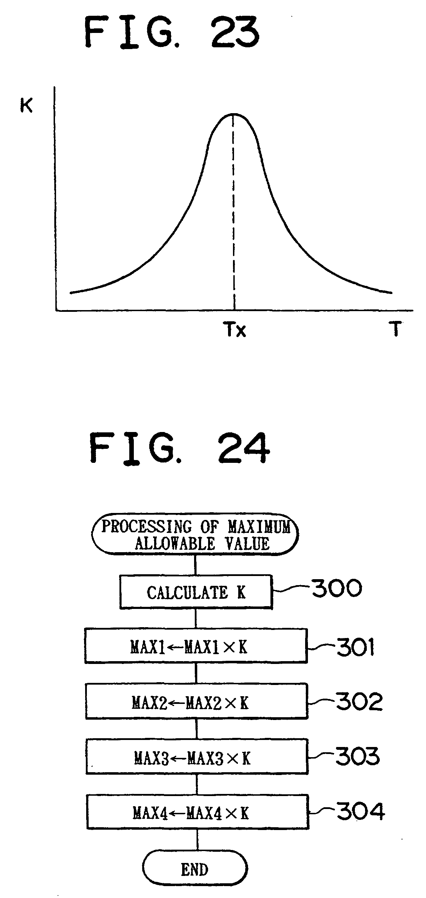

The maximum amount of NOx that can be absorbed into the NOx absorber 25 and the maximum amount of SO_{X} that can be absorbed into the NOx absorber 25 change in accordance with a temperature of the NOx absorber 25. For the purpose of minimizing a frequency with which the air-fuel ratio is made rich, it is preferable that the maximum allowable values MAX1 and MAX2 for NOx and the maximum allowable values MAX3 and MAX4 for SO_{X} be changed and corrected in accordance with a temperature of the NOx absorber 25. Thus, according to the embodiment of the present invention, a temperature sensor 54 is disposed in an exhaust pipe 24 upstream of the NOx absorber 25, and the maximum allowable values MAX1 and MAX2 for NOx and the maximum allowable values MAX3 and MAX4 for SO_{X} are changed in accordance with a temperature of the NOx absorber 25. That is, a correction factor K is preliminarily obtained as a function of a temperature T of the NOx absorber 25, in the form of a map shown in Fig. 23. Then, the maximum allowable values MAX1 and MAX2 for NOx and the maximum allowable values MAX3 and MAX4 for SO_{X}, which are used as reference values, are corrected by being multiplied by the correction factor K. In this manner, the frequency with which the air-fuel ratio is made rich so as to discharge NOx and SO_{X} can be reduced.

As shown in Fig. 23, the correction factor K is a function of temperature T and reaches its peak at a temperature Tx. An output signal from the temperature sensor 54 is inputted to the input port 45 via a corresponding AD converter 47.

Fig. 24 shows a processing routine for correcting maximum allowable values for NOx and SO_{X}. This routine is carried out as interruption handling at constant time intervals.

Referring to Fig. 24, first of all in step 300, a correction factor K is calculated using the map shown in Fig. 23. Then in step 301, the maximum allowable value MAX1 for NOx is multiplied by the correction factor K. Then in step 302, the maximum allowable value MAX2 for NOx is multiplied by the correction factor K. Then in step 303, the maximum allowable value MAX3 for SOx is multiplied by the correction factor K. Then in step 304, the maximum allowable value MAX4 for SOx is multiplied by the correction factor K.

Unburnt hydrocarbon contained in exhaust gas may adhere to the NOx absorber 25, so that the capability of the NOx absorber 25 to absorb NOx may deteriorate. That is, it is necessary to monitor a degree of adhesion of unburnt hydrocarbon to the NOx absorber 25 and to remove the unburnt hydrocarbon adhering to the NOx absorber 25 as the case requires. In order to remove the unburnt hydrocarbon adhering to the NOx absorber 25, it is required that the NOx absorber 25 contain a sufficient amount of oxygen for combustion of unburnt hydrocarbon and that the NOx absorber 25 be at a temperature sufficient to start combustion of the unburnt hydrocarbon. Especially during the second combustion wherein exhaust gas is at a low temperature, when the unburnt hydrocarbon adhering to the surface of the NOx absorber 25 should be removed, there is great necessity for raising a temperature of the NOx absorber 25. Thus, according to the embodiment of the present invention, when the unburnt hydrocarbon adhering to the NOx absorber 25 should be removed during the second combustion, the second combustion is forcibly switched to the first combustion. At this time, the operation is performed under a lean air-fuel ratio. In the case of such control, since the degree of leanness during the first combustion is smaller than the degree of leanness during the second combustion, the exhaust gas discharged from the combustion chamber 5 is at a high temperature. Accordingly, the temperature of the NOx absorber 25 is raised and a sufficient amount of oxygen is supplied to the NOx absorber 25, so that the unburnt hydrocarbon starts burning in the NOx absorber 25. Thus, once unburnt hydrocarbon has started burning, the combustion heat serves to maintain the NOx absorber 25 at a high temperature. Therefore, the first combustion is switched again to the second combustion. In this manner, the unburnt hydrocarbon adhering to the NOx absorber 25 is removed.

The first combustion is suited only for a relatively low load requirement. Therefore, when the load requirement is relatively high, a transition from the second combustion to the first combustion cannot be made. Thus, according to the present invention, when unburnt hydrocarbon should be removed from the NOx absorber 25 during the second combustion, the second combustion is switched to the first combustion only if the load requirement is lower than a predetermined value. Thereby, unburnt hydrocarbon can be removed with relatively small torque fluctuations.

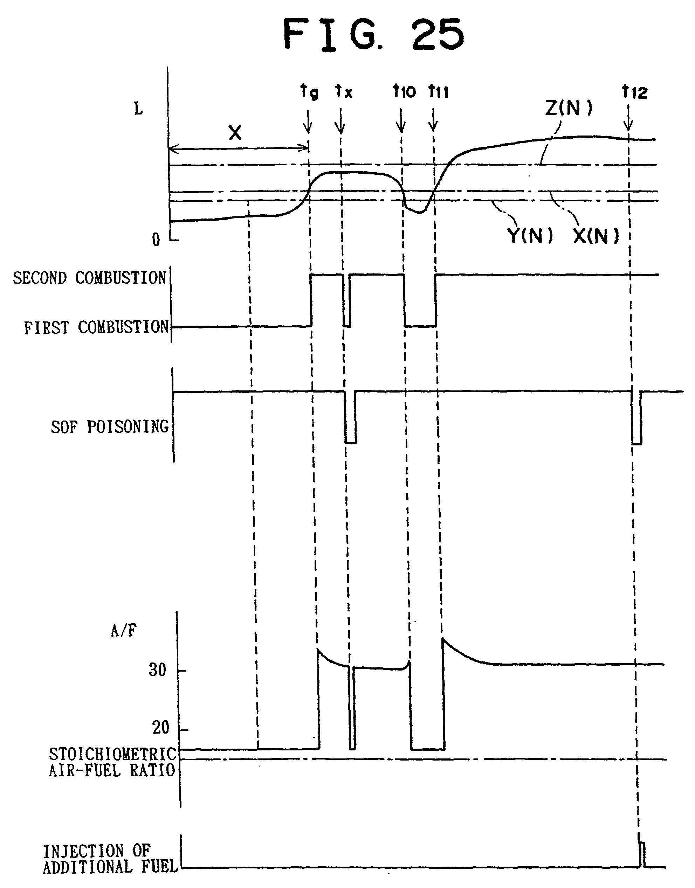

This will be explained with reference to Fig. 25. Referring to Fig. 25, the load requirement L is lower than the first border X(N) and the first combustion is carried out during a period X of time. Then, if the load requirement L exceeds the first border X(N) at a time t9, the first combustion is switched to the second combustion. Then, if an SOF poisoning flag indicating that unburnt hydrocarbon should be removed from the NOx absorber 25 is set at a time tx, the second combustion is temporarily switched to the first combustion, which is later returned to the second combustion. This is because the load requirement L is lower than a third border Z(N). At this time, the SOF poisoning flag is reset. The third border Z(N) is set to such a value that no great torque fluctuations are generated even after a transition from the second combustion to the first combustion. Then, if the load requirement L becomes lower than the second border Y(N) at a time t10, the second combustion is switched to the first combustion. Furthermore, if the load requirement L exceeds the first border X(N) at a time t11, the first combustion is switched to the second combustion. Then, it is assumed that the SOF poisoning flag has been reset at a time t12. At this time, since the load requirement L is higher than the third border Z(N), a transition from the second combustion to the first combustion causes great torque fluctuations. Therefore, such transition cannot be made. For this reason, additional fuel is injected during an expansion stroke. At this time, the additional fuel burns in the combustion chamber 5, so that the temperature of the exhaust gas discharged from the combustion chamber 5 is raised. Consequently, the temperature of the NOx absorber 25 is raised, and the unburnt hydrocarbon adhering to the NOx absorber 25 burns and is removed.

In the present invention, an oxygen concentration sensor 55 for detecting a concentration of oxygen contained in exhaust gas is disposed in the exhaust pipe 24 downstream of the NOx absorber 25. After the air-fuel ratio of the exhaust gas flowing into the NOx absorber 25 has been made rich so as to discharge NOx from the NOx absorber 25, it is determined, based on a change in output from the oxygen concentration sensor 55, that unburnt hydrocarbon should be removed from the NOx absorber 25. That is, when the NOx absorber 25 is not poisoned because of the unburnt hydrocarbon adhering thereto, as soon as the hydrocarbon reaches the NOx absorber, the oxygen contained in exhaust gas is consumed due to an oxidizing reaction on platinum Pt. Thus, the concentration of oxygen contained in the exhaust gas on the downstream side drops abruptly. However, if unburnt hydrocarbon adheres to the surface of the NOx absorber 25, namely, to the platinum Pt, the surface area of platinum Pt that can be committed to an oxidizing reaction decreases, so that the rate at which the oxidizing reaction proceeds on the platinum Pt decreases. Thus, the concentration of oxygen contained in exhaust gas on the downstream side drops gently. As the degree of poisoning (the amount of unburnt hydrocarbon adhering to the NOx absorber 25) increases, the concentration of oxygen contained in exhaust gas downstream of the NOx absorber 25 increases after the lapse of a predetermined time after the air-fuel ratio has been made rich. Accordingly, in the present invention, if the concentration of oxygen contained in exhaust gas downstream of the NOx absorber 25 is higher than a predetermined level after the lapse of a predetermined time after the air-fuel ratio of the exhaust gas has been made rich, the SOF poisoning flag is set.

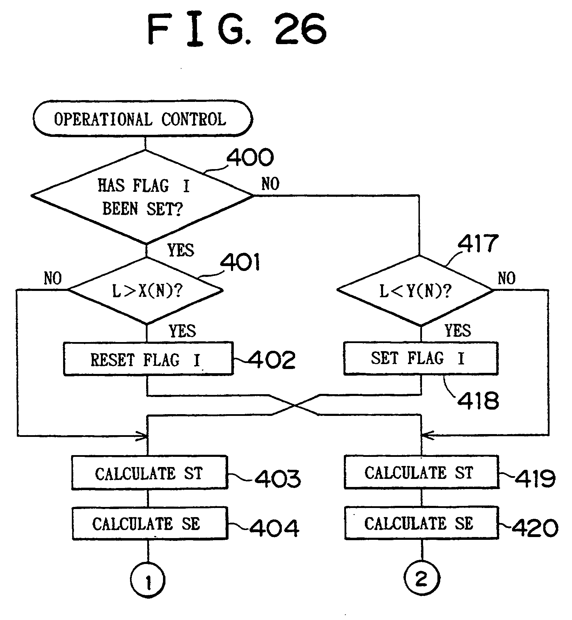

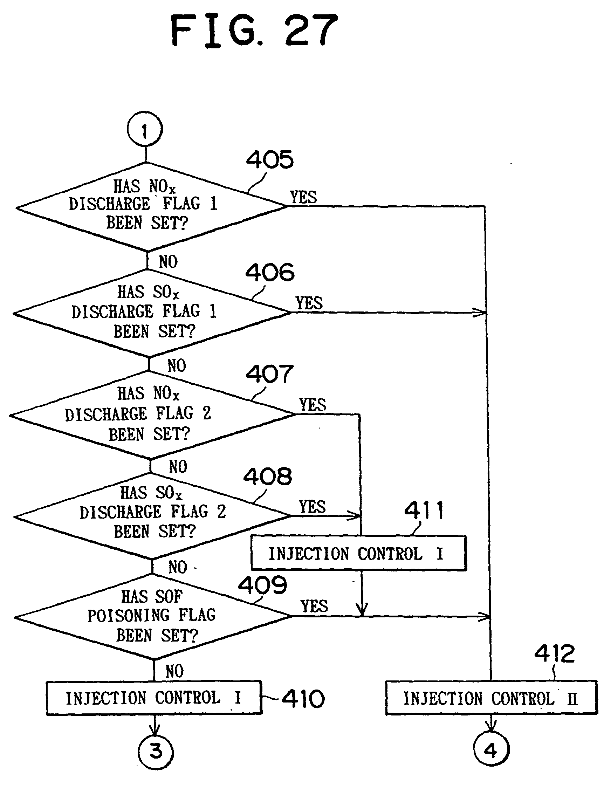

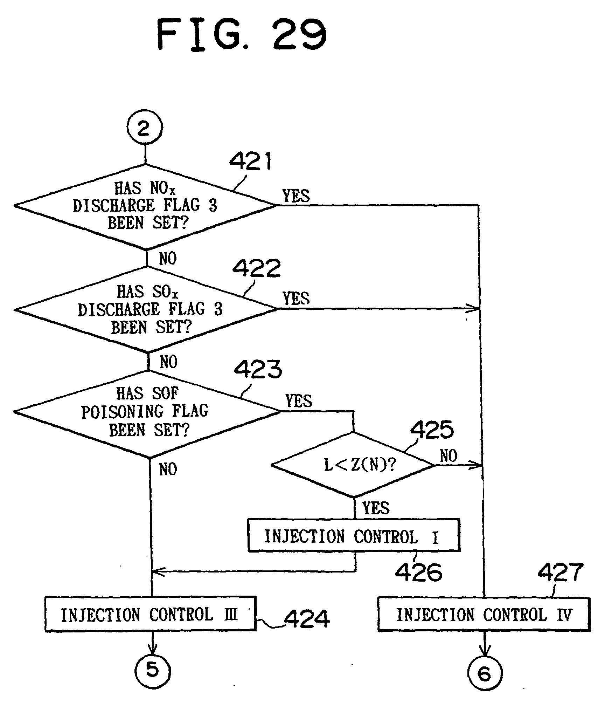

The operational control will now be described with reference to Figs. 26 to 29.

Referring to Fig. 26, first of all, it is determined in step 400 whether or not a flag I indicating that the engine is in the operational area I has been set. If the flag I has been set, that is, if the engine is in the operational area I, the process proceeds to step 401 where it is determined whether or not the load requirement L has exceeded a first border X1(N). If L ≤ X1(N), the process proceeds to step 403.

In step 403, a target opening degree ST of the throttle valve 20 is calculated using the map shown in Fig. 11A. The opening degree of the throttle valve 20 is then set to the thus-calculated target opening degree ST. Then in step 404, a target opening degree SE of the EGR control valve 31 is calculated using the map shown in Fig. 11B. The opening degree of the EGR control valve 31 is then set to the thus-calculated target opening degree SE. Then, it is determined in step 405 whether or not the NOx discharge flag 1 has been set. If the NOx discharge flag 1 has not been set, the process proceeds to step 406.

On the other hand, if it is determined in step 405 that the NOx discharge flag 1 has been set, the process proceeds to step 412 where injection control II is performed. That is, injection control for making rich an average air-fuel ratio in the combustion chamber 5 is performed. At this time, NOx is discharged from the NOx absorber 25.

It is determined in step 406 whether or not an SOx discharge flag 1 has been set. If the SO_{X} discharge flag 1 has not been set, the process proceeds to step 407. On the other hand, if the SO_{X} discharge flag 1 has been set in step 406, the process proceeds to step 412 where injection control II is performed. That is, injection control for making rich an average air-fuel ratio in the combustion chamber 5 is performed. The degree of richness at this time is greater than the degree of richness during the injection control that is performed when the NOx discharge flag 1 is set. This is because the temperature of the NOx absorber 25 needs to be further raised.

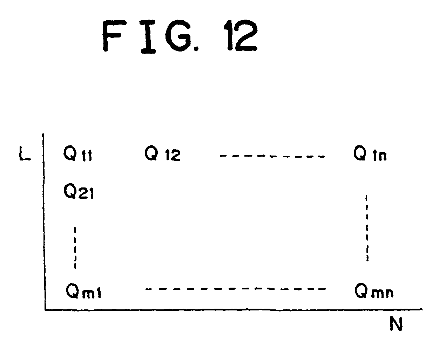

It is determined in step 407 whether or not the NOx discharge flag 2 has been set. If the NOx discharge flag 2 has not been set, the process proceeds to step 408. On the other hand, if it is determined in step 407 that the NOx discharge flag 2 has been set, the process proceeds to step 411 where the injection control I is performed. After that, the process proceeds to step 412 where the injection control II is performed. That is, during the injection control II, a transition from the second combustion to the first combustion is made, and fuel of an amount Q calculated from the map shown in Fig. 12 is injected so as to achieve the air-fuel ratio shown in Fig. 10. At this time, low-temperature combustion is carried out under a lean air-fuel ratio. After that, the aforementioned injection control II is performed, and NOx is discharged from the NOx absorber 25.

It is determined in step 408 whether or not the SO_{X} discharge flag 2 has been set. If the SO_{X} discharge flag 2 has not been set, the process proceeds to step 409. On the other hand, if it is determined in step 408 that the SOX discharge flag 2 has been set, the process proceeds to step 411 where the same injection control I is performed as in the case where the NOx discharge flag 2 has been set. After that, the process proceeds to step 412 where the same injection control II is performed as in the case where the SOx discharge flag 1 has been set.

It is determined in step 409 whether or not the SOF poisoning flag has been set. If the SOF poisoning flag has not been set, the process proceeds to step 410 where the same injection control II is performed as in the case where the NOx discharge flag 2 has been set. On the other hand, if it is determined in step 409 that the SOF poisoning flag has not been set, the process proceeds to step 412 where the same injection control II is performed as in the case where the NOx discharge flag 1 has been set.

On the other hand, if it is determined in step 401 that L > X(N), the process proceeds to step 402 where the flag I is reset. The process then proceeds to step 419.

That is, in step 419, a target opening degree ST of the throttle valve 20 is calculated using the map shown in Fig. 14A, and the opening degree of the throttle valve 20 is set to the thus-calculated target opening degree ST. Then in step 420, a target opening degree SE of the EGR control valve 31 is calculated using the map shown in Fig. 14B, and the opening degree of the EGR control valve 31 is set to the thus-calculated target opening degree SE. Then, it is determined in step 421 whether or not the NOx discharge flag 3 has been set. If the NOx discharge flag 3 has not been set, the process proceeds to step 422. If it is determined in step 421 that the NOx discharge flag 3 has been set, the process proceeds to step 427 where injection control IV is performed. That is, after fuel of an amount Q, which is calculated using the map shown in Fig. 15 so as to achieve the air-fuel ratio shown in Fig. 13, has been injected, additional fuel is injected in the latter half of an expansion stroke or during an exhaust stroke. Thereby, NOx is discharged from the NOx absorber 25.

It is determined in step 422 whether or not an SO_{X} discharge flag 3 has been set. If the SO_{X} discharge flag 3 has not been set, the process proceeds to step 423. On the other hand, if it is determined in step 422 that the SO_{X} discharge flag 3 has been set, the process proceeds to step 427 where the injection control IV is performed. At this time, the degree of richness of the air-fuel ratio is greater than the degree of richness when the NOx discharge flag 3 is set during the injection control IV.

It is determined in step 423 whether or not the SOF poisoning flag has been set. If the SOF poisoning flag has not been set, the process proceeds to step 424 where the injection control III is performed. That is, fuel of an amount Q, which is calculated using the map shown in Fig. 15 so as to achieve the air-fuel ratio shown in Fig. 13, is injected. At this time, the second combustion is carried out under a lean air-fuel ratio. On the other hand, if it is determined in step 423 that the SOF poisoning flag 3 has been set, the process proceeds to step 425 where it is determined whether or not the current load requirement L is larger than the third border Z(N). If L ≥ Z(N), the process proceeds to step 427 where the injection control IV is performed. On the other hand, if it is determined in step 425 that L < Z(N), the process proceeds to step 426 where after the same injection control I as in step 411 has been performed, the same injection control III as in step 424 is performed. In other words, after a transition from the second combustion to the first combustion has once been made, the second combustion is regained. At this time, the first combustion is carried out under a lean air-fuel ratio.

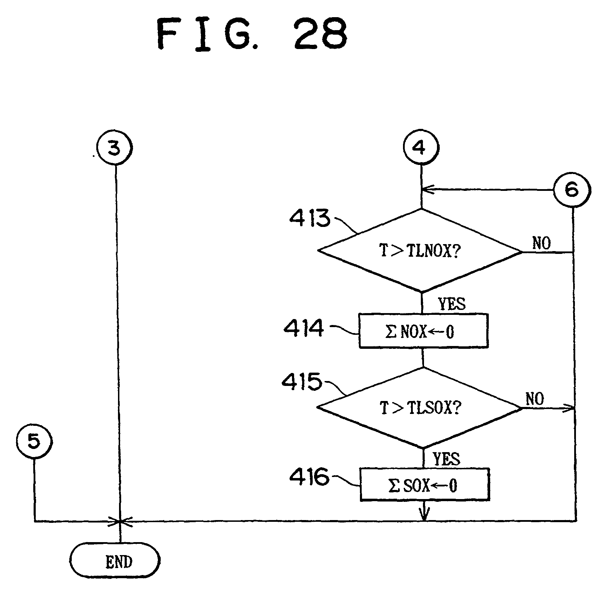

Referring to Fig. 28, it is determined in step 413 whether or not the temperature T of the NOx absorber 25 is higher than a NOx discharge activation temperature T1NOX, which is high enough to discharge NOx from the NOx absorber 25. If it is determined in step 413 that T > T1NOX, the process proceeds to step 414 where the NOx absorption amount ΣNOX is set to zero. That is, if T > T1NOX, it is determined in the preceding step that NOx has been discharged from the NOx absorber 25 when the air-fuel ratio of exhaust gas flowing into the NOx absorber 25 is made rich.

Furthermore, referring to Fig. 28, it is determined in step 415 whether or not the temperature T of the NOx absorber 25 is higher than a SOX discharge activation temperature T1SOX, which is high enough to discharge SO_{X} from the NOx absorber 25. If it is determined in step 415 that T > T1SOX, the process proceeds to step 416 where the SO_{X} absorption amount ΣSO_{X} is set to zero. That is, if T > T1SOX, it is determined in the preceding step that SOx has been discharged from the NOx absorber 25 when the air-fuel ratio of exhaust gas flowing into the NOx absorber 25 is made rich.

In the first embodiment, when unburnt hydrocarbon adheres to the NOx absorber 25, a transition from the second combustion to the first combustion is made. However, in this case, although the temperature of exhaust gas rises, a large amount of unburnt hydrocarbon may flow into the NOx absorber 25. At this time, even if the exhaust gas is at a high temperature, there is a possibility that the unburnt hydrocarbon adhering to the NOx absorber 25 is not ignited and that more unburnt hydrocarbon adheres to the NOx absorber 25. Thus, a second embodiment of the present invention aims at removing the unburnt hydrocarbon sticking to the NOx absorber 25 more reliably.

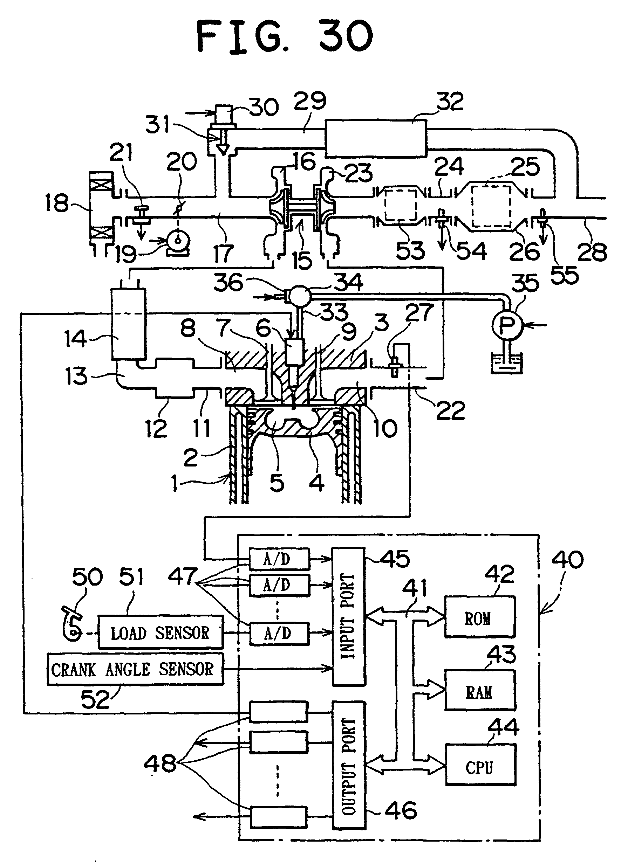

Fig. 30 shows an internal combustion engine according to the second embodiment of the present invention. In the second embodiment, a diesel particulate filter (hereinafter referred to as a DPF) 53 is disposed in the exhaust pipe 24 between the exhaust turbine wheel 23 and the NOx absorber 25. The DPF 53 collects fine particles such as soot and unburnt hydrocarbon (hereinafter referred to as particulate) contained in exhaust gas. The DPF is normally composed of a heat-resistant filter such as ceramic and the like. As for the other structural details, the second embodiment is identical to the first embodiment, and the description of the second embodiment will therefore be omitted.

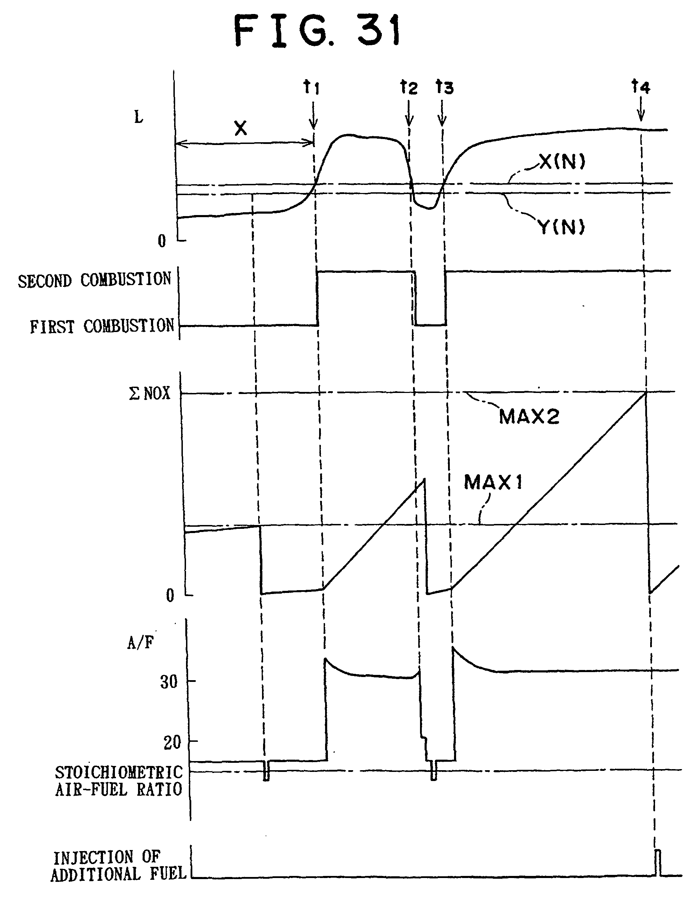

The control for discharging NOx from the NOx absorber 25 according to the second embodiment will now be described briefly with reference to Fig. 31. When the load requirement L is lower than the second border Y(N) as at the time t2, if ΣNOX > MAX1, the degree of leanness of the air-fuel ratio is temporarily reduced during the second combustion, and then a transition to the first combustion is made. In the case where the degree of leanness of the air-fuel ratio has thus been reduced during the second combustion, there is no change in amount of the hydrocarbon flowing into the NOx absorber 25, but the temperature of exhaust gas rises. Thus, if the NOx absorber 25 starts rising in temperature, the air-fuel ratio is made lean at the time of a transition from the second combustion to the first combustion. At this time, unburnt hydrocarbon, which is a precursor of soot, flows into the NOx absorber 25, but the temperature of the NOx absorber 25 has been already raised. Therefore, the unburnt hydrocarbon, which is a precursor of soot, burns without adhering to the NOx absorber 25, so that the NOx absorber 25 rises in temperature. Thereafter, the air-fuel ratio is made rich during the first combustion, and NOx is discharged from the NOx absorber 25. By performing such control, it becomes possible to reliably discharge NOx from the NOx absorber 25 without causing the unburnt hydrocarbon to adhere to the NOx absorber 25. The DPF 53 collects soot that is discharged from the engine when the degree of leanness is reduced during the second combustion.

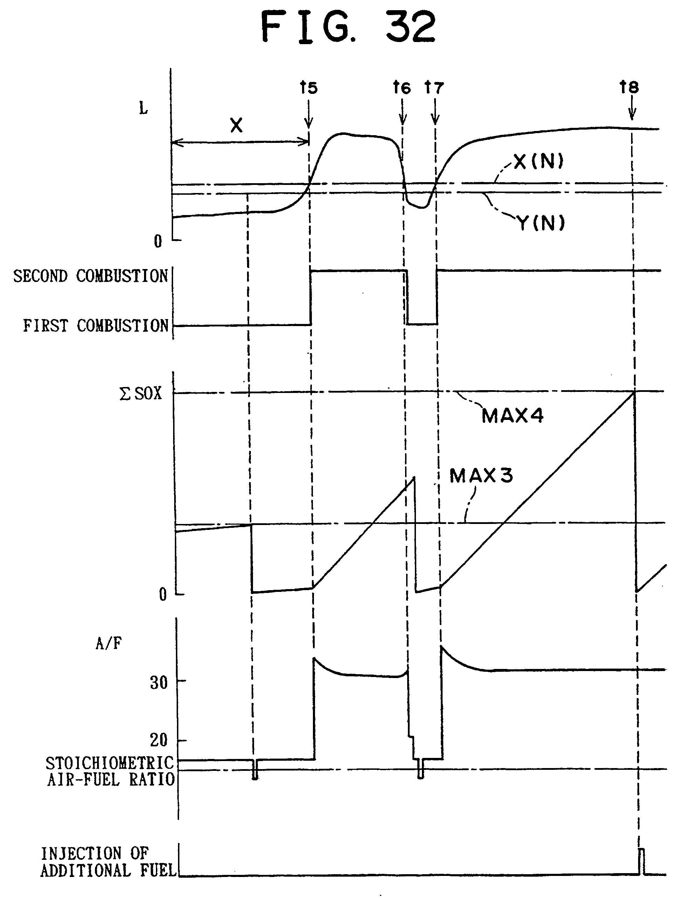

The control for discharging SO_{X} from the NOx absorber 25 according to the second embodiment will now be described with reference to Fig. 32. When the load requirement L is lower than the second border Y(N) as at the time t6, if ΣSOX > MAX3, the degree of leanness of the air-fuel ratio is temporarily reduced during the second combustion, and then a transition to the first combustion is made. This is based on the same reason as in discharging NOx from the NOx absorber. During the first combustion, after the air-fuel ratio has been made lean, it is made rich. That is, in the second embodiment, the degree of leanness is gradually reduced during the second combustion. Even after a transition from the second combustion to the first combustion, the degree of leanness is reduced, so that the air-fuel ratio eventually becomes rich. The DPF 53 collects particulate such as soot that is discharged from the combustion chamber 5 in controlling the air-fuel ratio as described above.

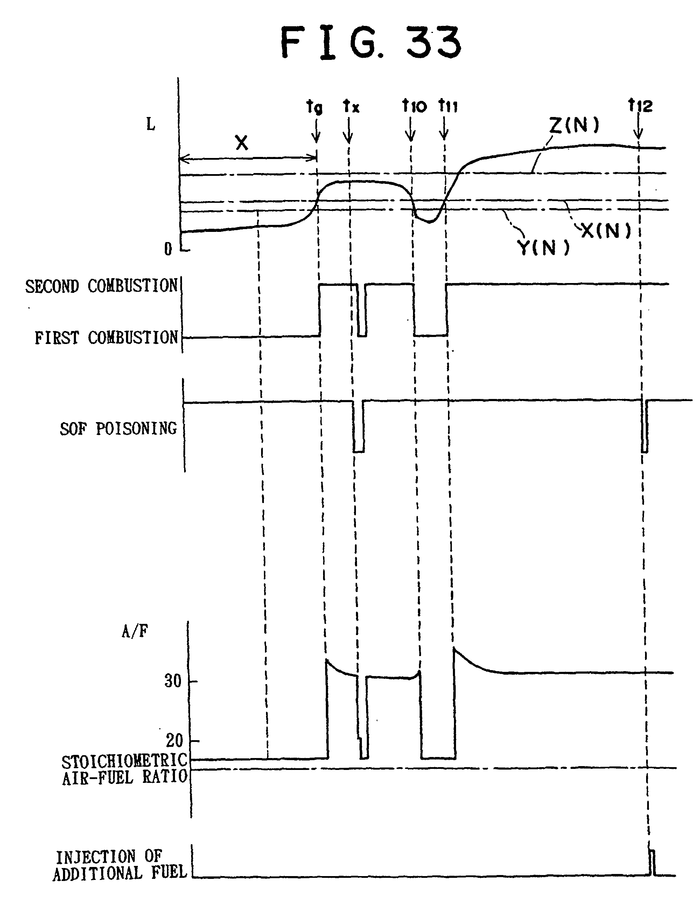

The control for removing unburnt hydrocarbon from the NOx absorber 25 according to the second embodiment will now be described with reference to Fig. 33. If it is indicated that unburnt hydrocarbon should be removed from the NOx absorber 25 at the time tx shown in Fig. 33, the degree of leanness of the air-fuel ratio is temporarily reduced during the second combustion, which is then switched to the first combustion and thereafter regained. This is because the load requirement L is lower than the third border Z(N). At this time, the SOF poisoning flag indicating that the unburnt hydrocarbon should be removed is reset. In thus controlling the air-fuel ratio, when the degree of leanness of the air-fuel ratio is reduced during the second combustion, the temperature of exhaust gas rises, which raises a temperature of the NOx absorber 25. The unburnt hydrocarbon that flows into the NOx absorber 25 after a transition to the first combustion has been made serves as a source of combustion. Then, the unburnt hydrocarbon adhering to the NOx absorber 25 burns and is removed from the NOx absorber 25.

If the engine operates over a certain period of time, especially during the second combustion, a large amount of particulate is accumulated in the DPF 53, which leads to an inconvenience of increasing an exhaust resistance. Thus, it is necessary to remove the particulate accumulated in the DPF 53 at predetermined time intervals and to regenerate the DPF 53. Normally, in regenerating the DPF 53, the temperature of exhaust gas is raised and oxygen for burning the particulate accumulated in the DPF 53 is supplied. However, at this time, the temperature of exhaust gas further rises due to the combustion of particulate, and the NOx absorber 25 also reaches a comparatively high temperature. Therefore, if NOx or SOx has been absorbed in the NOx absorber 25, even though the air-fuel ratio of exhaust gas flowing into the NOx absorber 25 is lean, the NOx or SOx is discharged from the NOx absorber 25, which is undesirable. Therefore, according to the present invention, if a total length of time of engine operation that has elapsed since last regeneration of the DPF 53 (hereinafter referred to simply as the total engine operation time) exceeds a predetermined first value, it is determined that the DPF 53 should be regenerated during the first combustion or at the time of a transition from the second combustion to the first combustion. If the total engine operation time exceeds a second predetermined value, which is larger than the first predetermined value, during the second combustion, it is determined that the DPF 53 should be regenerated during the second combustion.

Furthermore, even if it is determined that the DPF 53 should be regenerated, when NOx or SOx is absorbed in the NOx absorber 25, the air-fuel ratio of exhaust gas flowing into the NOx absorber 25 is made rich. The regeneration of the DPF 53 is carried out after NOx or SOx has been discharged from the NOx absorber 25. This prevents NOx or SOx from being discharged from the NOx 25 at the time of regeneration of the DPF 53 without being purified.

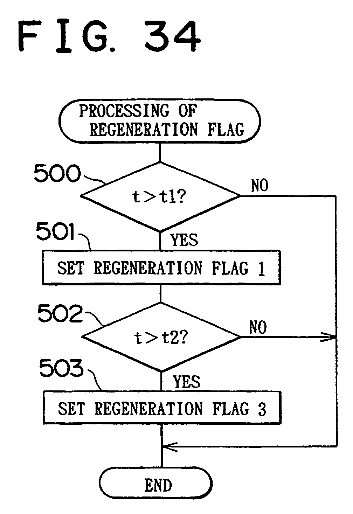

Fig. 34 shows a routine of a regeneration flag that is set when particulate needs to be removed from the DPF 53, namely when the DPF 53 needs to be regenerated. This routine is carried out as interruption handling at constant time intervals.

Referring to Fig. 34, first of all, it is determined in step 500 whether or not the total engine operation time t that has elapsed since last regeneration of the DPF 53 is greater than a first predetermined value t1. If it is determined in step 500 that t > t1, the process proceeds to step 501 where a regeneration flag 1 is set. Conversely, if it is determined in step 500 that t ≤ t1, the process is terminated.

It is determined in step 502 whether or not the total engine operation time t is greater than a second predetermined value t2, which is greater than the first predetermined value t1. If it is determined in step 502 that t > t2, the process proceeds to step 503 where a regeneration flag 3 is set.

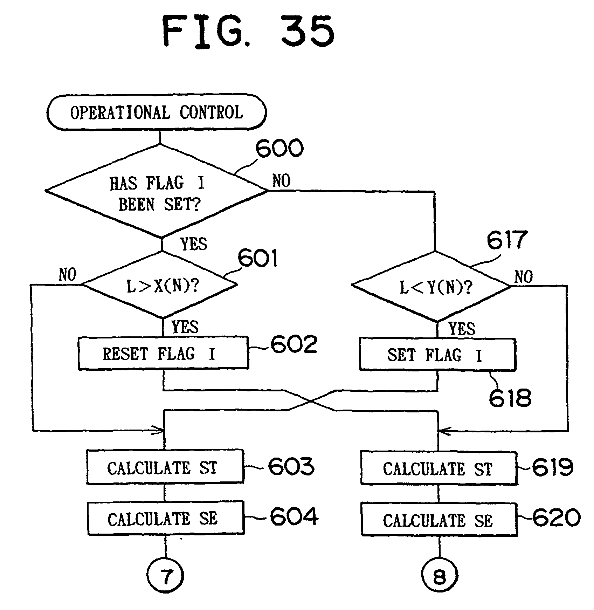

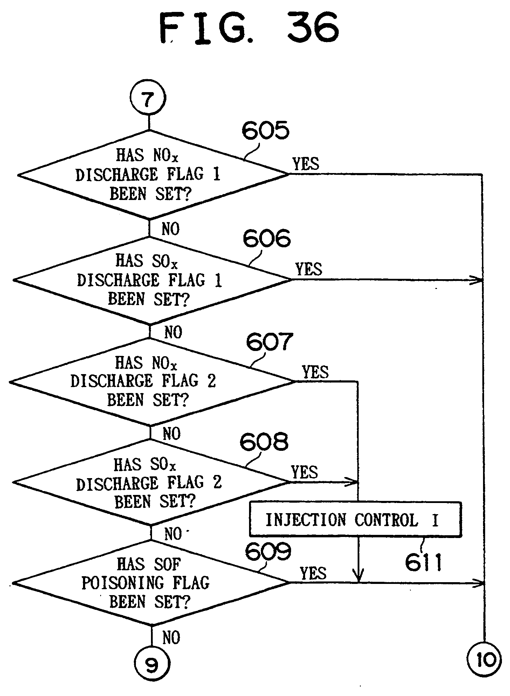

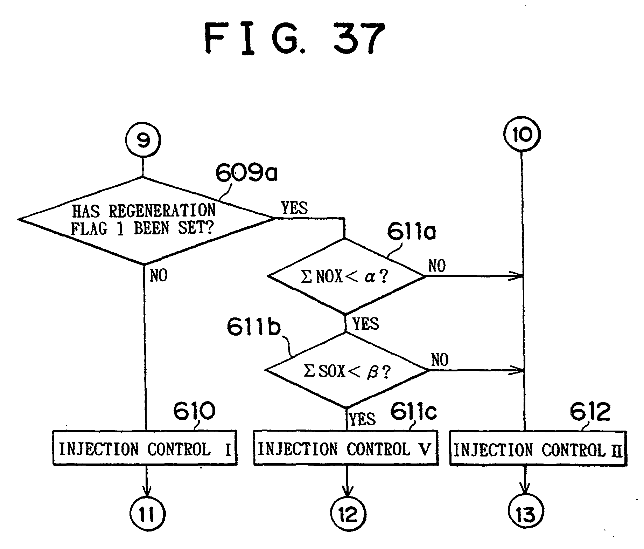

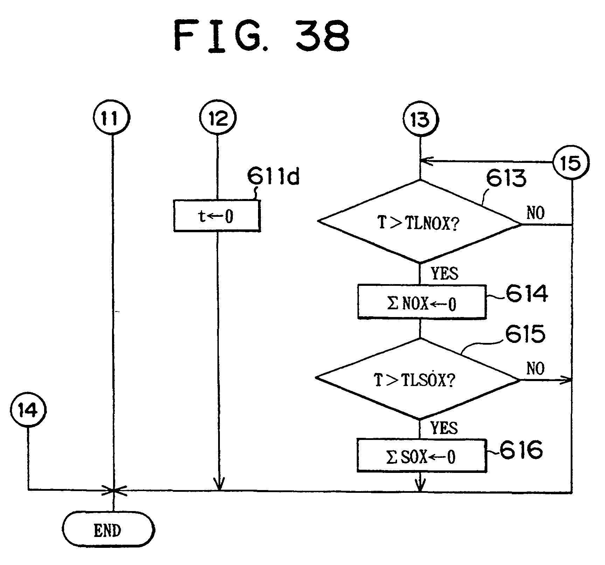

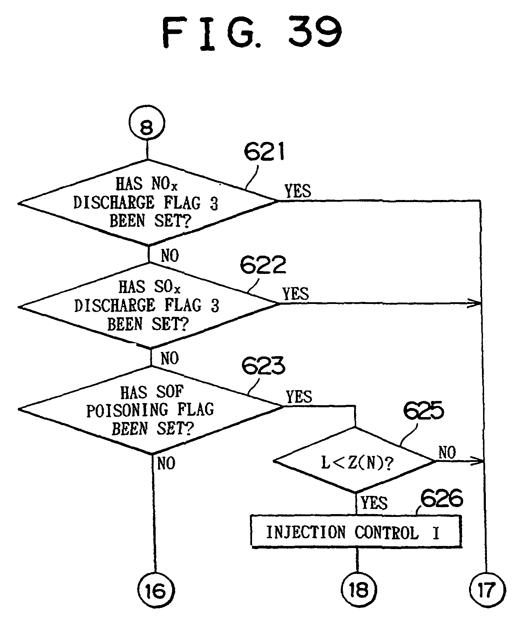

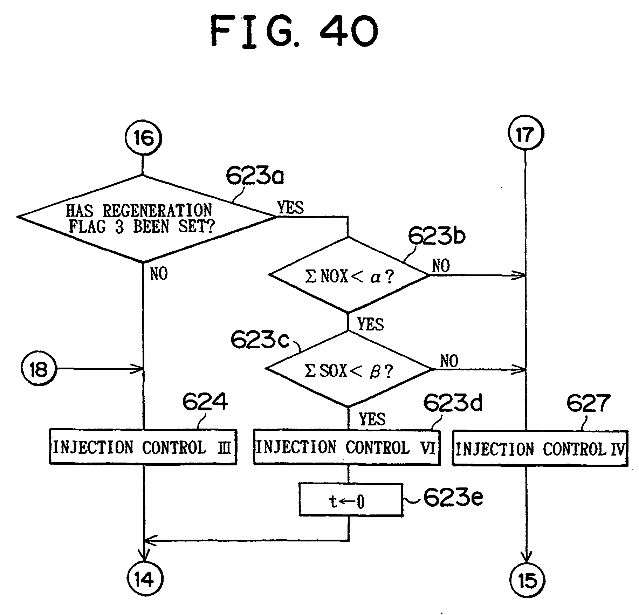

The operational control according to the second embodiment will now be described with reference to Figs. 35 to 40. Steps 600 to 609, 610, 611, 612 to 616, 617 to 623, 624, 625, 626 and 627 in Figs. 35 to 40 correspond to the steps 400 to 409, 410, 411, 412 to 416, 417 to 423, 424, 425, 426 and 427 in Figs. 26 to 29 respectively. Therefore, the explanation of these steps will be omitted.

It is determined in step 609a whether or not the regeneration flag 1 has been set. If the regeneration flag 1 has not been set, the process proceeds to step 610 where the same injection control I is performed as in step 410. Conversely, if it is determined in step 609a that the regeneration flag 1 has been set, the process proceeds to step 611a where it is determined whether or not the NOx absorption amount ΣNOX is smaller than a predetermined value α. If it is determined in step 611a that ΣNOX ≥ α, the process proceeds to step 612 where the same injection control II is performed as in step 412. On the other hand, if it is determined in step 611a that ΣNOX < α, the process proceeds to step 611b where it is determined whether or not the SO_{X} absorption amount ΣSOX is smaller than a predetermined value β. If it is determined in step 611b that ΣSOX ≥ β, the process proceeds to step 612 where the same injection control II is performed as in step 412. On the other hand, if it is determined in step 611b that ΣSOX < β, the process proceeds to step 611c where injection control V is performed. That is, fuel is injected such that the degree of leanness is reduced in comparison with the air-fuel ratio shown in Fig. 10. The process then proceeds to step 611d where the total engine operation time t is set to zero. It is determined in step 623a whether or not the regeneration flag 3 has been set. If the regeneration flag 3 has not been set, the process proceeds to step 624 where the same injection control III is performed as in step 424. On the other hand, if it is determined in step 623a that the regeneration flag 3 has been set, the process proceeds to step 623b where it is determined whether or not the NOx absorption amount ΣNOX is smaller than the predetermined value α. If it is determined in step 623b that ΣNOX ≥ α, the process proceeds to step 627 where the same injection control IV is performed as in step 427. On the other hand, if it is determined in step 623b that ΣNOX < α, the process proceeds to step 623c where it is determined whether or not the SO_{X} absorption amount ΣSOX is smaller than the predetermined value β. If it is determined in step 623c that ΣSOX ≥ β, the process proceeds to step 627 where the same injection control IV is performed as in step 427. On the other hand, if it is determined in step 623c that ΣSOX < β, the process proceeds to step 623d where injection control VI is performed. That is, fuel is injected such that the degree of leanness is reduced in comparison with the air-fuel ratio shown in Fig. 13. The process then proceeds to step 623e where the total engine operation time t is set to zero.

The characteristic of the NOx absorber 25 for discharging and reducing NOx differs depending on a temperature of the NOx absorber 25. In other words, the degree of activation of the NOx absorber 25 differs depending on a temperature thereof. Therefore, it is important to prevent the unburnt hydrocarbon supplied to the NOx absorber 25 with a view to discharging and reducing NOx from flowing toward the downstream side of the NOx absorber 25, and to minimize a length of time during which torque fluctuations result from the operation of making the air-fuel ratio of exhaust gas rich so as to discharge NOx from the NOx absorber 25. From this standpoint, even in the case where a certain amount of unburnt hydrocarbon is supplied so as to discharge and reduce the same amount of NOx, it is necessary to change the manner in which the unburnt hydrocarbon is supplied when NOx should be discharged from the NOx absorber 25, in accordance with a degree of activation of the NOx absorber 25. This will be explained hereinafter in detail.

For example, in the case where the degree of activation of the NOx absorber 25 is high when the air-fuel ratio of exhaust gas is made rich so as to discharge NOx from the NOx absorber 25, the NOx absorber 25 sufficiently performs the function of discharging and reducing NOx, even if a relatively large amount of unburnt hydrocarbon is supplied to the NOx absorber 25 during a relatively short period of time. However, in the case where the degree of activation of the NOx absorber 25 is low, if a relatively large amount of unburnt hydrocarbon is supplied to the NOx absorber 25 during a relatively short period of time, the NOx absorber 25 cannot sufficiently perform the function of discharging and reducing NOx. That is, the NOx and the unburnt hydrocarbon flow toward the downstream side of the NOx absorber 25. Thus, in this case, it is preferable to supply a relatively small amount of unburnt hydrocarbon to the NOx absorber 25 over a relatively long period of time. Further, in the case where the degree of activation of the NOx absorber 25 is high, even if a relatively small amount of hydrocarbon is supplied to the NOx absorber 25 over a relatively long period of time, NOx is discharged and reduced. However, the air-fuel ratio in the combustion chamber is made rich over a long period of time, which is, as described above, undesirable from the standpoint of a reduction of torque fluctuations. In this case, it is preferable to supply a relatively large amount of hydrocarbon during a relatively short period of time.

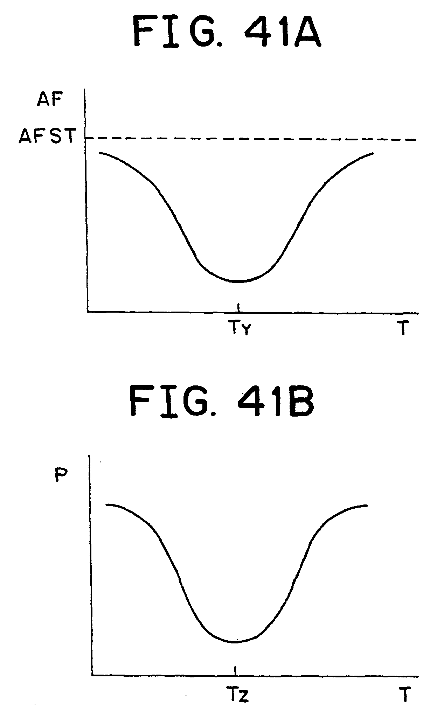

Thus, according to the present invention, the air-fuel ratio A/F at the time when NOx should be discharged from the NOx absorber 25 is preliminarily stored in the ROM 42 in the form of a map as a function of the temperature of the NOx absorber 25, as can be seen from Fig. 41A. The period of time P during which the air-fuel ratio is made rich when NOx should be discharged from the NOx absorber 25 is preliminarily stored in the ROM 42 in the form of a map, as can be seen from Fig. 41B. When the temperature of the NOx absorber 25 is lower than a certain temperature, the degree of activation thereof increases with a rise in temperature. However, after having exceeded the certain temperature, the temperature of the NOx absorber 25 gradually becomes lower. That is, the degree of activation of the NOx absorber 25 has a curve that reaches its peak when the NOx absorber 25 is at a certain temperature. Accordingly, the curve shown in Fig. 41A indicates that the degree of richness of the air-fuel ratio A/F reaches its maximum at a temperature Ty, and the curve shown in Fig. 41B indicates that the duration period of time P becomes the shortest at a temperature Tz. In the present invention, the air-fuel ratio A/F and the rich air-fuel ratio duration period of time P are calculated using these maps. The higher the degree of activation of the NOx absorber 25 becomes, the greater the degree of richness of the air-fuel ratio becomes, and the shorter the rich air-fuel ratio duration period of time P becomes. The lower the degree of activation of the NOx absorber 25 becomes, the smaller the degree of richness of the air-fuel ratio becomes, and the longer the rich air-fuel ratio duration period of time becomes.

In the present invention, hydrocarbon is used to discharge NOx from the NOx absorber 25 and reduce the NOx. However, the capacity of a hydrocarbon to discharge NOx from the NOx absorber and reduce the NOx differs depending on a characteristic of the hydrocarbon. That is, the lower the boiling point of a hydrocarbon becomes, the higher the performance of the hydrocarbon to discharge and reduce NOx becomes. In other words, a hydrocarbon with a lower boiling point exhibits a higher reactivity with NOx. Thus, in addition to the temperature of the NOx absorber, the boiling point of the hydrocarbon may also be used to correct the degree of richness of the air-fuel ratio A/F and the rich air-fuel ratio duration period of time P. Needless to say, in this case, the lower the boiling point of a hydrocarbon becomes, the higher the degree of richness of the air-fuel ratio A/F is made, and the shorter the rich air-fuel ratio duration period of time is made.

In the present invention, an HC adsorbent may be disposed upstream of the NOx absorber 25 or adjacent to an upstream end of the NOx absorber 25. In this case, the HC adsorbent adsorbs and burns hydrocarbon contained in exhaust gas. In this manner, the NOx absorber 25 can be prevented from being poisoned by unburnt hydrocarbon. For example, a porous material such as zeolite, mordenite, silica alumina, silica, alumina, titania and ferrierite may be used as the HC adsorbent.

Further, if the amount of noble metal carried on the upstream portion of the NOx absorber 25 is made larger than the amount of noble metal carried on the other portions, the NOx absorber 25 can also be prevented from being poisoned by unburnt hydrocarbon.

In the description of the first embodiment, an example in which the NOx absorber is employed as a catalyst functioning as an oxidizer has been cited. However, even in the case where an oxidizing catalyst is used, if the first combustion wherein the air-fuel ratio is lean is once carried out at the time of a transition from the second combustion to the first combustion, the catalyst rises in temperature. Therefore, even if the first combustion wherein the air-fuel ratio is rich is thereafter carried out, the catalyst can be maintained at a predetermined temperature. First combustion and second combustion are selectively switched. During the first combustion, a combustion chamber 5 contains inactive gas of an amount larger than an amount where a generation amount of soot reaches its peak, so that soot is hardly generated. During the second combustion, the combustion chamber 5 contains inactive gas of an amount smaller than an amount where a generation amount of soot reaches its peak. In switching from the second combustion to the first combustion, a transition to the first combustion with a lean air-fuel ratio in the combustion chamber is made so as to heat a catalyst beyond a predetermined temperature.

## Claims

1. Internal combustion engine (1) comprising
a combustion chamber (5), wherein in response to an increase of inactive gas in said combustion chamber (5) a generation amount of soot gradually increases and reaches its peak and wherein in response to a further increase of inactive gas in said combustion chamber (5) the temperature of fuel and ambient gas in said combustion chamber (5) during combustion becomes lower than a temperature at which soot is produced so that soot is hardly generated,
an NOx absorber (25) disposed in an engine exhaust passage (28) which absorbs NOx contained in an inflow exhaust gas when an air-fuel ratio of the exhaust gas is lean and discharged the NOx absorbed therein when an air-fuel ratio of the exhaust gas becomes equal to a stoichiometric air-fuel ratio or rich;
**characterized by**
a switching means (40) for selectively switching between a first combustion mode and a second combustion mode, wherein during the first combustion mode the combustion chamber (5) contains inactive gas of an amount larger than an amount where a generation amount of soot reaches its peak, so that soot is hardly generated, and wherein during the second combustion mode the combustion chamber (5) contains inactive gas of an amount smaller than an amount where a generation amount of soot reaches its peak, wherein said switching means (40) is adapted to generate a transitional mode to the first combustion mode with a rich air-fuel ratio when NOx or SOx should be discharged from the NOx absorber during the second combustion mode, after the second combustion mode has been temporarily switched to the first combustion with a lean air-fuel ratio.

2. The internal combustion engine according to claim 1, wherein:
a filter (53) for collecting soot discharged from the combustion chamber (5) is disposed in the engine exhaust passage (28); and
when soot collected in the filter (53) should be discharged during the second combustion, after the second combustion has been temporarily switched to the first combustion with a rich air-fuel ratio, a transition to the first combustion with a lean air-fuel ratio is made.

3. The internal combustion engine according to claim 1 or 2, wherein:
said switching means (40) is adapted to generate a transition to the first combustion mode with a lean air-fuel ratio in said combustion chamber (5), so as to raise a temperature of said catalyst (25) beyond a predetermined temperature, when switching from the second combustion mode to the first combustion mode.

4. The internal combustion engine according to claim 3, wherein:
said switching means (40) is adapted to generate a transition to the first combustion mode with a lean air-fuel ratio in the combustion chamber (5) at first, and then to generate a further transition to the first combustion mode with a rich air-fuel ratio in the combustion chamber (5), when switching from the second combustion mode to the first combustion mode.

5. The internal combustion engine according to claim 3, wherein:
a catalyst is provided which is adapted to raise a degree of activation of reaction of said catalyst serving fuel as a reducer in exhaust gas with a rich air-fuel ratio is disposed upstream of said catalyst (25) having the function of oxidation.

6. The internal combustion engine according to claim 3, wherein:
the internal combustion engine (1) is provided with a recirculation device (29, 30, 31) for recirculating exhaust gas discharged from the combustion chamber (5) to an engine intake passage (17); and
the inactive gas is composed of said recirculated exhaust gas.

7. The internal combustion engine according to claim 6, wherein:
a ratio of exhaust gas recirculation is equal to or higher than about 55%.

8. The internal combustion engine according to claim 3, wherein:
an operational area of the engine is divided into a first operational area I on a low-load side and a second operational area II on a high-load side; and
the first combustion is carried out in the first operational area I and the second combustion is carried out in the second operational area II.

9. The internal combustion engine according to claim 1, wherein:
said catalyst (25) is composed of at least one of an oxidizing catalyst, a three-way catalyst and an NOx absorber.

10. Method for prohibiting poisoning of an NOx absorber (25) purifying an exhaust gas of an internal combustion engine (1) comprising a combustion chamber (5), wherein in response to a further increase of inactive gas in said combustion chamber (5), a temperature of fuel and ambient gas in said combustion chamber (5) during combustion becomes lower than a temperature at which soot is produced so that soot is hardly generated, wherein said NOx absorber (25) absorbs NOx contained in inflow exhaust gas when an air-fuel ratio of the exhaust gas is lean and discharges the NOx absorbed therein when an air-fuel ratio of the exhaust gas becomes equal to a stoichiometric air-fuel ratio or rich, is disposed in an engine exhaust passage (28);
wherein said internal combustion engine (1) selectively switches between first combustion and second combustion by switching means (40), wherein during the first combustion, the combustion chamber (5) contains inactive gas of an amount larger than an amount where a generation amount of soot reaches its peak, so that soot is hardly generated, and wherein during the second combustion, the combustion chamber (5) contains inactive gas of an amount smaller than an amount where a generation amount of soot reaches its peak; and
generating a transition to the first combustion with a rich air-fuel ratio when NOx or SOx should be discharged from the NOx absorber during the second combustion, after the second combustion has been temporarily switched to the first combustion with a lean air-fuel ratio.

11. Method according to claim 10, wherein when said switching means (40) switches from the second combustion to the first combustion, it generates a transition condition towards the first combustion with a lean air-fuel ratio in the combustion chamber (5), so as to raise a temperature of the NOx absorber (25) beyond a predetermined temperature.

12. Method according to claim 11, wherein in switching from the second combustion to the first combustion, a transition to the first combustion with a lean air-fuel ratio in the combustion chamber (5) is first made; and a further transition to the first combustion with a rich air-fuel ratio in the combustion chamber (5) is then made.

13. Method according to claim 11, **characterized by** collecting soot discharged from the combustion chamber (5) by a filter (53) which is disposed in the engine exhaust passage (28).

14. Method according to claim 11, **characterized by** reducing a degree of leanness in the combustion chamber (5) during the second combustion temporarily; and then switching from the second combustion to the first combustion with a lean air-fuel ratio in the combustion chamber when switching from the second combustion to the first combustion.

15. Method according to claim 11, **characterized by** raising a degree of an activation of reaction of said NOx absorber (25) serving fuel as a reducer in exhaust gas with a rich air-fuel ratio by a catalyst which is disposed upstream of said NOx absorber (25) having the function of oxidation.

16. Method according to claim 11, **characterized by** recirculating exhaust gas of the internal combustion engine (1) from the combustion chamber (5) to an engine intake passage (17) by a recirculation device (29, 30, 31) for recirculating discharged exhaust gas as inactive gas.

17. Method according to the preceding claims 11 to 16, **characterized in that** the ratio of exhaust gas recirculation is controlled to equal to or higher than about 55%.

18. Method according to claim 11, **characterized by** dividing an operational area of the engine into a first operational area I on a low-load side and a second operational area II on a high-load side and carrying out the first combustion in a first operational area I and the second combustion in a second operational area II.

19. Method according to claim 10, **characterized by** the following steps:
collecting soot by a filter (53) being disposed in the engine exhaust passage (28) for collecting soot discharged from the combustion chamber (5); and
making a transition to the first combustion with a lean air-fuel ratio when soot collected in the filter (53) should be discharged during the second combustion, after the second combustion has been temporarily switched to the first combustion with a rich air-fuel ratio.

## Patentansprüche

1. Brennkraftmaschine (1) mit
einer Verbrennungskammer (5), bei der in Abhängigkeit von einem Anstieg eines inaktiven Gases in der Verbrennungskammer (5) die Menge an erzeugtem Ruß allmählich ansteigt und ihre Spitze erreicht und bei der in Abhängigkeit von einem weiteren Anstieg des inaktiven Gases in der Verbrennungskammer (5) die Temperatur des Kraftstoffs und Umgebungsgases in der Verbrennungskammer (5) während der Verbrennung niedriger wird als die Temperatur, bei der der Ruß erzeugt wird, so daß kaum Ruß erzeugt wird,
einem NOx-Absorber (25), der in einem Auslaßkanal (28) der Brennkraftmaschine angeordnet ist und in einem einströmenden Abgas enthaltenes NOx absorbiert, wenn das Luft-Kraftstoff-Verhältnis des Abgases mager ist, sowie das darin absorbierte NOx abgibt, wenn das Luft-Kraftstoff-Verhältnis des Abgases den Wert des stöchiometrischen Luft-Kraftstoff-Verhältnisses erreicht oder fett wird;
**gekennzeichnet durch**
eine Umschalteinrichtung (40) zum wahlweisen Umschalten zwischen einem ersten Verbrennungsmodus und einem zweiten Verbrennungsmodus, wobei die Verbrennungskammer (5) während des ersten Verbrennungsmodus das inaktive Gas in einer Menge enthält, die größer ist als die Menge, mit der die Menge des erzeugten Rußes ihre Spitze erreicht, so daß kaum Ruß erzeugt wird, und wobei die Verbrennungskammer (5) während des zweiten Verbrennungsmodus das inaktive Gas in einer Menge enthält, die geringer ist als die Menge, bei der die erzeugte Menge an Ruß ihre Spitze erreicht, wobei ferner die Umschalteinrichtung (40) einen Übergangsmodus zum ersten Verbrennungsmodus mit einem fetten Luft-Kraftstoff-Verhältnis erzeugen kann, wenn NOx oder SOx vom NOx-Absorber während des zweiten Verbrennungsmodus abgegeben werden sollen, nachdem der zweite Verbrennungsmodus zeitweise auf den ersten Verbrennungsmodus mit einem mageren Luft-Kraftstoff-Verhältnis umgeschaltet worden ist.

2. Brennkraftmaschine nach Anspruch 1, bei der
ein Filter (53) zum Sammeln des von der Verbrennungskammer (5) abgegebenen Rußes im Auslaßkanal (28) der Brennkraftmaschine angeordnet ist und
ein Übergang zum ersten Verbrennungsmodus mit einem mageren Luft-Kraftstoff-Verhältnis durchgeführt wird, wenn der im Filter (53) gesammelte Ruß während des zweiten Verbrennungsmodus abgegeben werden soll, nachdem der zweite Verbrennungsmodus zeitweise zum Verbrennungsmodus mit einem fetten Luft-Kraftstoff-Verhältnis umgeschaltet worden ist.

3. Brennkraftmaschine nach Anspruch 1 oder 2, bei der
die Umschalteinrichtung (40) einen Übergang zum ersten Verbrennungsmodus mit einem mageren Luft-Kraftstoff-Verhältnis in der Verbrennungskammer (5) erzeugen kann, um die Temperatur des Katalysators (25) über eine vorgegebene Temperatur hinaus anzuheben, wenn vom zweiten Verbrennungsmodus zum ersten Verbrennungsmodus umgeschaltet wird.

4. Brennkraftmaschine nach Anspruch 3, bei der
die Umschalteinrichtung (40) zuerst einen Übergang zum ersten Verbrennungsmodus mit einem mageren Luft-Kraftstoff-Verhältnis in der Verbrennungskammer (5) und dann einen weiteren Übergang zum ersten Verbrennungsmodus mit einem fetten Luft-Kraftstoff-Verhältnis in der Verbrennungskammer (5) erzeugen kann, wenn vom zweiten Verbrennungsmodus zum ersten Verbrennungsmodus umgeschaltet wird.

5. Brennkraftmaschine nach Anspruch 3, bei der
ein Katalysator vorgesehen ist, der den Aktivierungsgrad der Reaktion des Katalysators erhöhen kann, welcher Kraftstoff als Reduktionsmittel im Abgas bereitstellt, wenn sich ein fettes Luft-Kraft-stoff-Verhältnis aufstromseitig des Katalysators (25) mit O-xidationsfunktion befindet.

6. Brennkraftmaschine nach Anspruch 3, bei der
die Brennkraftmaschine (1) mit einer Rückführvorrichtung (29,30,31) zur Rückführung von von der Verbrennungskammer (5) abgegebenem Abgas in einen Einlaßkanal (17) der Brennkraftmaschine versehen ist und
das inaktive Gas aus dem rückgeführten Abgas besteht.

7. Brennkraftmaschine nach Anspruch 6, bei der der Anteil der Abgasrückführung etwa 55% entspricht oder höher ist.

8. Brennkraftmaschine nach Anspruch 3, bei der
der Betriebsbereich der Brennkraftmaschine in einen ersten Betriebsbereich I auf der Seite niedriger Last und einen zweiten Betriebsbereich II auf der Seite hoher Last unterteilt ist und
die erste Verbrennung im ersten Betriebsbereich I und die zweite Verbrennung im zweiten Betriebsbereich II durchgeführt werden.

9. Brennkraftmaschine nach Anspruch 1, bei der der Katalysator (25) mindestens aus einer der nachfolgenden Komponenten besteht: einem Oxidationskatalysator, einem Dreiwegekatalysator und einem NOx-Absorber.

10. Verfahren zum Verhindern der Verunreinigung eines NOx-Absorbers (25), der ein Abgas einer Brennkraftmaschine (1) reinigt, welche eine Verbrennungskammer (5) umfaßt, bei der in Abhängigkeit von einem weiteren Anstieg eines inaktiven Gases in der Verbrennungskammer (5) die Temperatur des Kraftstoffs und des Umgebungsgases in der Verbrennungskammer (5) während der Verbrennung niedriger wird als die Temperatur, bei der Ruß erzeugt wird, so daß kaum Ruß erzeugt wird, wobei der NOx-Absorber (25), der das im einströmenden Abgas enthaltene NOx absorbiert, wenn das Luft-Kraftstoff-Verhältnis des Abgases mager ist, und das darin absorbierte NOx abgibt, wenn das Luft-Kraftstoff-Verhältnis des Abgases den Wert des stöchiometrischen Luft-Kraftstoff-Verhältnisses erreicht oder fett wird, in einem Auslaßkanal (28) der Brennkraftmaschine angeordnet ist;
wobei die Brennkraftmaschine (1) über eine Umschalteinrichtung (40) wahlweise zwischen einer ersten Verbrennung und einer zweiten Verbrennung umschaltet, wobei die Verbrennungskammer (5) während der ersten Verbrennung ein inaktives Gas einer Menge enthält, die größer ist als die Menge, bei der die erzeugte Rußmenge ihre Spitze erreicht, so daß kaum Ruß erzeugt wird, und wobei die Verbrennungskammer (5) während der zweiten Verbrennung das inaktive Gas in einer Menge enthält, die geringer ist als die Menge, bei der die erzeugte Rußmenge ihre Spitze erreicht; und
die Brennkraftmaschine einen Übergang zur ersten Verbrennung mit einem fetten Luft-Kraftstoff-Verhältnis erzeugt, wenn NOx oder SOx vom NOx-Absorber während der zweiten Verbrennung abgegeben werden soll, nachdem die zweite Verbrennung zeitweise auf die erste Verbrennung mit einem mageren Luft-Kraftstoff-Verhältnis umgeschaltet worden ist.

11. Verfahren nach Anspruch 10, bei dem beim Umschalten der Umschalteinrichtung (40) von der zweiten Verbrennung auf die erste Verbrennung diese einen Übergangszustand in Richtung auf die erste Verbrennung mit einem mageren Luft-Kraftstoff-Verhältnis in der Verbrennungskammer (5) erzeugt, um die Temperatur des NOx-Absorbers (25) über eine vorgegebene Temperatur hinaus zu erhöhen.

12. Verfahren nach Anspruch 11, bei dem beim Umschalten von der zweiten Verbrennung auf die erste Verbrennung zuerst ein Übergang zur ersten Verbrennung mit einem mageren Luft-Kraftstoff-Verhältnis in der Verbrennungskammer (5) und ein weiterer Übergang zur ersten Verbrennung mit einem fetten Luft-Kraftstoff-Verhältnis in der Verbrennungskammer (5) durchgeführt wird.

13. Verfahren nach Anspruch 11, **gekennzeichnet durch** das Sammeln von Ruß, der von der Verbrennungskammer (5) abgegeben wurde, mit einem Filter (53), der im Auslaßkanal (28) der Brennkraftmaschine angeordnet ist.

14. Verfahren nach Anspruch 11, **gekennzeichnet durch** das zeitweise Verringern des Grades der Magerheit in der Verbrennungskammer (5) während der zweiten Verbrennung und das nachfolgende Umschalten von der zweiten Verbrennung zur ersten Verbrennung mit einem mageren Luft-Kraftstoff-Verhältnis in der Verbrennungskammer, wenn von der zweiten Verbrennung auf die erst Verbrennung umgeschaltet wird.

15. Verfahren nach Anspruch 11, **gekennzeichnet durch** das Anheben des Aktivierungsgrades der Reaktion des NOx-Absorbers (25), der Kraftstoff als Reduktionsmittel im Abgas mit fettem Luft-Kraftstoff-Verhältnis bereitstellt, **durch** einen Katalysator, der aufstromseitig des NOx-Absorbers (25) angeordnet ist und Oxidationsfunktion besitzt.

16. Verfahren nach Anspruch 11, **gekennzeichnet durch** das Rückführen von Abgas der Brennkraftmaschine (1) von der Verbrennungskammer (5) zu einem Einlaßkanal (17) der Brennkraftmaschine über eine Rückführvorrichtung (29,20,31) zum Rückführen des abgegebenen Abgases als inaktives Gas.

17. Verfahren nach einem der Ansprüche 11 - 16, **dadurch gekennzeichnet, daß** der Anteil der Abgasrückführung auf einen Wert von etwa 55% oder mehr gesteuert wird.

18. Verfahren nach Anspruch 11, **gekennzeichnet durch** das Unterteilen des Betriebsbereiches der Brennkraftmaschine in einen ersten Betriebsbereich I auf der Seite niedriger Last und einen zweiten Betriebsbereich II auf der Seite hoher Last und **durch** das Durchführen der ersten Verbrennung im ersten Betriebsbereich (I) und das Durchführen der zweiten Verbrennung im zweiten Betriebsbereich II.

19. Verfahren nach Anspruch 10, **gekennzeichnet durch** die folgenden Schritte:
Sammeln von Ruß **durch** einen Filter (53), der im Auslaßkanal (28) der Brennkraftmaschine angeordnet ist, um den von der Verbrennungskammer (5) abgegebenen Ruß zu sammeln; und
Durchführen eines Übergangs zur ersten Verbrennung mit einem mageren Luft-Kraftstoff-Verhältnis, wenn der im Filter (53) gesammelte Ruß während der zweiten Verbrennung abgegeben werden soll, nachdem die zweite Verbrennung zeitweise auf die erste Verbrennung mit einem fetten Luft-Kraftstoff-Verhältnis umgeschaltet worden ist.

## Revendications

1. Moteur à combustion interne (1) comprenant
une chambre de combustion (5), dans lequel, en réponse à une augmentation des gaz inactifs dans ladite chambre de combustion (5), une quantité de génération de suie augmente progressivement et atteint sa crête et dans lequel, en réponse à une augmentation supplémentaire des gaz inactifs dans ladite chambre de combustion (5), la température du carburant et des gaz environnants dans ladite chambre de combustion (5) pendant la combustion devient inférieure à une température à laquelle la suie est produite de sorte que la suie est difficilement générée,
un absorbant de NOx (25) disposé dans un passage d'échappement du moteur (28) qui absorbe les NOx contenus dans les gaz d'échappement entrants lorsque le rapport air-carburant des gaz d'échappement est pauvre et évacue les NOx absorbés dans celui-ci lorsque le rapport air-carburant des gaz d'échappement devient égal à un rapport air-carburant stoechiométrique ou riche ;
**caractérisé par**
un moyen de commutation (40) destiné à commuter sélectivement entre un premier mode de combustion et un deuxième mode de combustion, dans lequel pendant le premier mode de combustion, la chambre de combustion (5) contient des gaz inactifs en une quantité plus importante qu'une quantité à laquelle une quantité de génération de suie atteint sa crête, de sorte que la suie est difficilement générée, et dans lequel pendant le deuxième mode de combustion, la chambre de combustion (5) contient des gaz inactifs en une quantité inférieure à une quantité à laquelle une quantité de génération de suie atteint sa crête, dans lequel ledit moyen de commutation (40) est adapté pour générer un mode de transition vers le premier mode de combustion avec un rapport air-carburant riche lorsque les NOx ou les SOx doivent être évacuais de l'absorbant de NOx pendant le deuxième mode de combustion, après que le deuxième mode de combustion ait été temporairement commuté vers le premier mode de combustion avec un rapport air-carburant pauvre.

2. Moteur à combustion interne selon la revendication 1, dans lequel :
un filtre (53) destiné à collecter la suie évacuée de la chambre de combustion (5) est disposé dans le passage d'échappement du moteur (28) ; et
lorsque la suie collectée dans le filtre (53) doit être évacuée pendant la deuxième combustion, après que la deuxième combustion ait été temporairement commutée vers la première combustion avec le rapport air-carburant riche, une transition vers la première combustion avec un rapport air-carburant pauvre est réalisée.

3. Moteur à combustion interne selon la revendication 1 où la revendication 2, dans lequel :
ledit moyen de commutation (40) est adapté pour générer une transition vers le premier mode de combustion avec un rapport air-carburant pauvre dans ladite chambre de combustion (5), de façon à élever une température dudit catalyseur (25) au-delà d'une température prédéterminée, lors de la commutation du deuxième mode de combustion au premier mode de combustion.

4. Moteur à combustion interne selon la revendication 3, dans lequel :
ledit moyen de commutation (40) est adapté pour générer une transition vers le premier mode de combustion avec un rapport air-carburant pauvre dans la chambre de combustion (5) tout d'abord, puis pour générer une transition supplémentaire vers le premier mode de combustion avec un rapport air-carburant riche dans la chambre de combustion (5), lors de la commutation du deuxième mode de combustion au premier mode de combustion.

5. Moteur à combustion interne selon la revendication 3, dans lequel :
un catalyseur est prévu, lequel est adapté pour élever un degré d'activation de réaction dudit catalyseur, le carburant servant en tant qu'agent de réduction dans les gaz d'échappement avec un rapport air-carburant riche est disposé en amont dudit catalyseur (25) possédant la fonction d'oxydation.

6. Moteur à combustion interne selon la revendication 3, dans lequel :
le moteur à combustion interne (1) est muni d'un dispositif de recirculation (29,30, 31) destiné à faire recirculer les gaz d'échappement évacués de la chambre de combustion (5) vers un passage d'admission du moteur (17) ; et
les gaz inactifs sont composés desdits gaz d'échappement mis à recirculer.

7. Moteur à combustion interne selon la revendication 6, dans lequel :
un rapport de recirculation des gaz d'échappement est égal ou supérieur à environ 55 %.

8. Moteur à combustion interne selon la revendication 3, dans lequel :
une zone opérationnelle du moteur est divisée en une première zone opérationnelle I du côté faible charge et une deuxième zone opérationnelle II du côté charge élevée ; et
la première combustion est réalisée dans la première zone opérationnelle I et la deuxième combustion est réalisée dans la deuxième zone opérationnelle II.

9. Moteur à combustion interne selon la revendication 1, dans lequel :
ledit catalyseur (25) est composé d'au moins l'un parmi un catalyseur d'oxydation, un catalyseur à trois voies et un absorbant de NOx.

10. Procédé destiné à empêcher l'empoisonnement de l'absorbant de NOx (25) purifiant les gaz d'échappement d'un moteur à combustion interne (1) comprenant une chambre de combustion (5), dans lequel, en réponse à une augmentation supplémentaire des gaz inactifs dans ladite chambre de combustion (5), une température du carburant et des gaz environnants dans ladite chambre de combustion (5) pendant la combustion devient inférieure à une température à laquelle la suie est produite, de sorte que la suie est difficilement générée, dans lequel ledit absorbant de NOx (25), qui absorbe les NOx contenus dans les gaz d'échappement entrants lorsque le rapport air-carburant des gaz d'échappement est pauvre et évacue les NOx absorbés dans celui-ci lorsque le rapport air-carburant des gaz d'échappement devient égal à un rapport air-carburant stoechiométrique ou riche, est disposé dans un passage d'échappement du moteur (28) ;
dans lequel ledit moteur à combustion interne (1) commute sélectivement entre une première combustion et une deuxième combustion par le moyen de commutation (40), dans lequel, pendant la première combustion, la chambre de combustion (5) contient des gaz inactifs en une quantité supérieure à une quantité à laquelle une quantité de génération de suie atteint sa crête, de sorte que la suie est difficilement générée, et dans lequel, pendant la deuxième combustion, la chambre de combustion (5) contient des gaz inactifs en une quantité inférieure à une quantité à laquelle une quantité de génération de suie atteint sa crête ; et
génère une transition vers la première combustion avec un rapport air-carburant riche lorsque les NOx ou les SOx doivent être évacuais de l'absorbant de NOx pendant la deuxième combustion, après que la deuxième combustion ait été temporairement commutée vers la première combustion avec un rapport air-carburant pauvre.

11. Procédé selon la revendication 10, dans lequel, lorsque ledit moyen de commutation (40) commute de la deuxième combustion à la première combustion, il génère une condition de transition vers la première combustion avec un rapport air-carburant pauvre dans la chambre de combustion (5), de façon à élever une température de l'absorbant de NOx (25) au-delà d'une température prédéterminée.

12. Procédé selon la revendication 11, dans lequel lors de la commutation de la deuxième combustion à la première combustion, une transition vers la première combustion avec un rapport air-carburant pauvre dans la chambre de combustion (5) est d'abord réalisée ; et une transition supplémentaire vers la première combustion avec un rapport air-carburant riche dans la chambre de combustion (5) est ensuite réalisée.

13. Procédé selon la revendication 11, **caractérisé par** la collecte de la suie évacuée de la chambre de combustion (5) par un filtre (53) qui est disposé dans le passage d'échappement du moteur (28).

14. Procédé selon la revendication 11, **caractérisé par** la réduction temporaire d'un degré de pauvreté dans la chambre de combustion (5) pendant la deuxième combustion ; puis par la commutation de la deuxième combustion à la première combustion avec un rapport air-carburant pauvre dans la chambre de combustion lors de la commutation de la deuxième combustion à la première combustion.

15. Procédé selon la revendication 11, **caractérisé par** l'élévation d'un degré d'activation de réaction dudit absorbant de NOx (25) du carburant servant d'agent de réduction dans les gaz d'échappement avec un rapport air-carburant riche par un catalyseur qui est disposé en amont dudit absorbant de NOx (25) possédant la fonction d'oxydation.

16. Procédé selon la revendication 11, **caractérisé par** la recirculation des gaz d'échappement du moteur à combustion interne (1) de la chambre de combustion (5) au passage d'admission du moteur (17) par un dispositif de recirculation (29, 30, 31) destiné à faire recirculer les gaz d'échappement évacués en tant que gaz inactifs.

17. Procédé selon les revendications 11 à 16 qui précèdent, **caractérisé en ce que** le rapport de recirculation des gaz d'échappement est commandé pour être égal ou supérieur à environ 55 %.

18. Procédé selon la revendication 11, **caractérisé par** la division d'une zone opérationnelle du moteur en une première zone opérationnelle I du côté faible charge et une deuxième zone opérationnelle II du côté charge élevée, et réalisant la première combustion dans la première zone opérationnelle I et la deuxième combustion dans la deuxième zone opérationnelle II.

19. Procédé selon la revendication 10, **caractérisé par** les étapes suivantes consistant à :
collecter la suie par un filtre (53) étant disposé dans le passage d'échappement du moteur (28) pour collecter la suie évacuée de la chambre de combustion (5) ; et
effectuer une transition vers la première combustion avec un rapport air-carburant pauvre lorsque la suie collectée dans le filtre (53) doit être évacuée pendant la deuxième combustion, après que la deuxième combustion ait été temporairement commutée vers la première combustion avec un rapport air-carburant riche.
